# EUROPEAN PATENT APPLICATION

(11) **EP 4 582 323 A1**
(43) Date of publication of application: **09.07.2025**
(21) Application number: 22958206.9
(22) Date of filing: 06.09.2022
(51) Int. Cl.: B60W 40/08, B60W 50/14

(54) **DRIVER MONITORING DEVICE OF VEHICLE AND OPERATION METHOD THEREOF**

(71) Applicant: LG Electronics Inc., Yeongdeungpo-gu Seoul 07336 (KR)
(72) Inventor: GOH, Minsoo, Seoul 06772 (KR); PARK, Mingeun, Seoul 06772 (KR)
(74) Representative: Vossius & Partner Patentanwälte Rechtsanwälte mbB
(86) International application number: PCT/KR2022/013300
(87) International publication number: WO 2024/053751

(57) **Abstract**

A driver monitoring device of a vehicle and an operation method thereof are disclosed. The driver monitoring device of a vehicle according to the present invention may receive driving information of a vehicle being driven, and monitor the face and a gaze direction of a driver driving the vehicle through a sensor mounted in the vehicle. At this time, on the basis of the received driving information of the vehicle, a driving attention area of the driver and a gaze distraction sensitivity to the driving attention area are adaptively and variably applied so that the driver's condition can be monitored. Accordingly, monitoring of the driver's condition, such as drowsiness, can be performed continuously while eliminating a driving-distraction factor caused by frequent warnings based on a consistent standard.

## Description

### Technical Field

The present disclosure relates to a driver monitoring apparatus for a vehicle and a method of operating the driver monitoring apparatus for a vehicle and, more particularly, to a driver monitoring apparatus for a vehicle, the apparatus being capable of monitoring a driver's state based on the driver's gaze dispersion partially occurring within an attention focus region during vehicle travel, and a method of operating the driver monitoring apparatus for a vehicle.

### Background Art

To enhance the safety and convenience of vehicle users, various sensors and apparatuses are provided in the vehicle to enable the vehicle's diverse functions. These vehicle functions may be categorized into convenience functions for enhancing driver convenience and safety functions for enhancing the safety of drivers and/or pedestrians.

Vehicle convenience functions refer to infotainment (information + entertainment) features and are designed to enhance driver convenience, such as supporting partial autonomous driving or improving visibility during night driving and in blind spots. Examples of these vehicle convenience functions include Active Cruise Control (ACC), a Smart Parking Assist System (SPAS), Night Vision (NV), a Head-Up Display (HUD), an Around View Monitor (AVM), an Adaptive Headlight System (AHS), and so forth.

Vehicle safety functions are technologies for ensuring the safety of drivers and/or pedestrians and include a lane departure warning system (LDWS), a lane keeping assist system (LKAS), an autonomous emergency braking (AEB) function, and so forth.

Technology for preventing a driver's drowsiness at the wheel, which is one of the vehicle safety functions, recognizes the driver's drowsiness state by analyzing the driver's captured image and accordingly outputs a warning to the driver. This technology has been commercialized.

Specifically, a Driver Monitoring System (DMS) is a safety system that detects the driver's drowsiness and gaze dispersion using a camera mounted on the vehicle's dashboard and outputs an alert, such as an audio alarm or a warning light, to help the driver focus attention on driving.

Notably, recently, Euro NCAP (E-NCAP) has made it mandatory for all new vehicles to be equipped with the DMS, effective from 2024 onward. The driver's gaze dispersion is a key factor in triggering an alarm, as required by Euro NCAP. For example, a determination reference for the driver's gaze dispersion, as required by Euro NCAP, is that the driver's gaze dispersion occurs for successive 3 seconds or accumulates to 10 seconds or more within a 30-second period while a vehicle travels at or above a speed of 10 km/h.

In addition, Korean Patent No. 1078466 discloses a technology that ascertains the driver's alertness state based on an analysis of the driver's eye-blinking pattern or the like, which is obtained by capturing the image of the driver's face.

However, the determination reference for the driver's gaze dispersion depends on whether or not the driver's attention focus direction remains within a region along the travel direction of the vehicle. Therefore, in many cases, a false alarm is triggered, or an alarm is frequently triggered even when the driver focuses attention on another region as needed (for example, when the driver focuses attention on a rearview mirror or a side mirror). This may increase the driver's fatigue and instead act as a factor that interferes with driving.

### Disclosure of Invention

### Technical Problem

Objects of the present disclosure include addressing the above-mentioned problems and other related problems.

One object of one or several embodiments of the present disclosure is to provide a driver monitoring apparatus for a vehicle, the apparatus being capable of providing a DMS alert without falsely identifying a driver's response to various travel situations as the driver's gaze dispersion during vehicle travel, and a method of operating the driver monitoring apparatus for a vehicle.

Another object of one or several embodiments of the present disclosure is to provide a driver monitoring apparatus for a vehicle, the apparatus being capable of triggering a DMS alert without false alert triggers or the frequent occurrence of alerts by monitoring a driver's state during vehicle travel, and a method of operating the driver monitoring apparatus for a vehicle.

A further object of one or several embodiments of the present disclosure is to provide a driver monitoring apparatus for a vehicle, the apparatus being capable of determining a driver's state, such as inattentiveness, by adaptively changing a region, the direction of the driver's gaze at the region being monitored, as needed based on a travel situation, and a method of operating the driver monitoring apparatus for a vehicle.

Still another object of one or several embodiments of the present disclosure is to provide a driver monitoring apparatus for a vehicle, the apparatus being capable of determining a driver's state, such as drowsiness or inattentiveness, in a manner appropriate for various travel situations by adjusting the sensitivity level for the driver's gaze dispersion in a manner that varies as needed, and a method of operating the driver monitoring apparatus for a vehicle.

### Solution to Problem

To accomplish the above-mentioned objects, a driver monitoring apparatus for a vehicle according to the present disclosure can receive travel information of the vehicle and monitor a driver's state by adaptively varying the driver's attention focus and the sensitivity level for the driver's gaze dispersion partially occurring within the attention focus region. Accordingly, while continuously monitoring the driver's state, such as the driver's drowsiness, the driver monitoring apparatus can eliminate factors that interfere with driving due to frequent warnings triggered by a fixed reference.

For example, the driver monitoring apparatus for a vehicle according to the present disclosure can change the attention focus region for monitoring the driver based on travel information detected outside the vehicle and/or on travel information, such as operations of components within the vehicle.

In addition, for example, while the driver travels on a travel path, the driver monitoring apparatus can adaptively adjust the sensitivity level for the driver's gaze dispersion partially occurring within a region to which the driver's gaze is directed currently, by detecting travel situations, such as lane changes, U-turns, and traveling on a sloped road. Accordingly, the driver's natural gaze shift during vehicle travel is not falsely identified as the driver's simple gaze dispersion.

In addition, for example, while the driver drives the vehicle, the driver's gaze at a travel-related attention focus region can be more strictly controlled for safe driving in a situation where the driver's attention focus is further necessary depending on accumulated travel distance and travel speed.

According to one aspect of the present disclosure, there is provided a driver monitoring apparatus for a vehicle, the apparatus including: a reception unit that receives travel information of a vehicle that travels; and a sensor that is mounted inside the vehicle and detects a driver's face and gaze direction during vehicle travel; and a processor that monitors the driver's gaze dispersion partially occurring within an attention focus region using the sensor, determines whether or not to change the attention focus region based on the received travel information, and determines the driver's state corresponding to the driver's gaze dispersion based on the determination. In the driver monitoring apparatus, the processor monitors the sensitivity level for the driver's gaze dispersion partially occurring within the attention focus region based on the received travel information.

According to an embodiment, in the driver monitoring apparatus, a change in the attention focus region may correspond to one or more changes in the following: the location of the attention focus region, the size of the attention focus region, the number of attention focus regions, or the duration of the driver's gaze fixation, and the processor may determine the extent of the driver's gaze dispersion based on either the duration for which the driver's gaze direction remains within the attention focus region or the frequency with which the driver's gaze remains within the attention focus region.

According to an embodiment, in the driver monitoring apparatus, the travel information may include information about noise in the vicinity of the vehicle, which is collected by a microphone in the vehicle, and the processor may determine whether or not to expand the attention focus region based on the collected information about the noise in the vicinity of the vehicle and may monitor the driver's state corresponding to the extent of the driver's gaze dispersion based on the determination.

According to an embodiment, in the driver monitoring apparatus, in a case where one or more attention focus regions are expanded based on the determination, the processor may increase the sensitivity level for the driver's gaze dispersion partially occurring within the expanded attention focus region in such a manner as to reach or exceed a predetermined range and may monitor the driver's state using the increased sensitivity level for the driver's gaze dispersion.

According to an embodiment, in the driver monitoring apparatus, the processor may change the sensitivity level for the driver's gaze dispersion based on the travel information, and then, in response to the recognition that the cause of the change in the sensitivity level no longer exists, the processor restore the attention focus region and the sensitivity level for the driver's gaze dispersion to the original states thereof, respectively.

According to an embodiment, in the driver monitoring apparatus, the sensor may be a DMS camera that is installed on the front side of the interior of the vehicle and recognizes the driver's face and gaze direction, and, in a case where it is determined that attentive driving is necessary depending on the driver's determined state, the processor may transfer a corresponding alert signal to one or more output means.

According to an embodiment, in the driver monitoring apparatus, the travel information of the vehicle may include an operational state of an infotainment system in the vehicle, and the processor may recognize that a region of the infotainment system is included in the attention focus region, analyze the type of content output to the infotainment system while the infotainment system is in operation, and adjust the sensitivity level for the driver's gaze dispersion in a manner that varies with the analysis.

According to an embodiment, in the driver monitoring apparatus, the processor may determine whether or not to reduce the sensitivity level for the driver's gaze dispersion, depending on whether or not the content is categorized as content that contributes to the vehicle travel.

According to an embodiment, in the driver monitoring apparatus, the travel information of the vehicle may include a turned-on state of Blind Spot Detection (BSD) alert display, and the processor may reduce the sensitivity level for the driver's gaze dispersion partially occurring within a BSD region where the alert display is turned on.

According to an embodiment, in the driver monitoring apparatus, the travel information may include information about the accumulated travel time of the vehicle, and wherein, in a case where the accumulated travel time, detected after the vehicle starts to travel, reaches a predetermined range, the processor may increase the sensitivity level for the driver's gaze dispersion partially occurring within the attention focus region.

According to an embodiment, in the driver monitoring apparatus, the travel information may include information about the travel speed of the vehicle, and, in a case where the travel speed of the vehicle exceeds a predetermined range, the processor may increase the sensitivity level for the driver's gaze dispersion partially occurring within the attention focus region and may adjust the sensitivity level in such a manner as to increase in proportion to the travel speed of the vehicle.

According to an embodiment, in the driver monitoring apparatus, the travel information may include angle information of a steering wheel of the vehicle, and, when it is recognized that the angle of the steering wheel of the vehicle reaches or exceeds a predetermined range, the processor may expand the attention focus region in a manner that corresponds to the travel direction of the vehicle, and may monitor the driver's state by reducing the sensitivity level for the driver's gaze dispersion partially occurring within the expanded attention focus region.

According to an embodiment, in the driver monitoring apparatus, while it is recognized that the angle of the steering wheel of the vehicle reaches or exceeds the predetermined range, the processor may increase the sensitivity level for the driver's gaze dispersion for an infotainment system and a cluster region in the vehicle.

According to an embodiment, in the driver monitoring apparatus, the travel information may include information about the travel-related slope angle of the vehicle, and, in response to the recognition that the travel-related slope angle of the vehicle deviates from a predetermine range, the processor may expand the attention focus region and may reduce the sensitivity level for the driver's gaze dispersion partially occurring within the expanded attention focus region in proportion to the extent to which the travel-related slope angle of the vehicle deviates from the predetermined range.

According to an embodiment, in the driver monitoring apparatus, the attention focus region may be expanded to face an infotainment system and a cluster region in the vehicle.

According to another aspect of the present disclosure, there is provided a method of operating a driver monitoring apparatus, the method including: a step of receiving travel information of a vehicle that travels; a step of determining whether or not to change an attention focus region based on the received travel information; a step of adjusting the sensitivity level for a driver's gaze dispersion partially occurring within the determined attention focus region; and a step of determining whether or not attentive driving is necessary depending on the driver's state corresponding to the driver's gaze dispersion and outputting an alert based on the determination.

### Advantageous Effects of Invention

The effects of the driver monitoring apparatus for a vehicle according to the present disclosure and a method of operating the driver monitoring apparatus for a vehicle are described as follows.

According to one or several embodiments of the present disclosure, various types of travel information that change in real time during vehicle travel are collected, and an attention focus region or the sensitivity level for a driver's gaze dispersion for determining the driver's state are adjusted adaptively. Thus, the driver's gaze that shifts as needed during vehicle travel and the driver's gaze dispersion that occurs due to inattentiveness during vehicle travel can be distinguished. Accordingly, the driver's state can be ascertained more accurately, and thus a DMS alert can be provided.

In addition, according to one or several embodiments of the present disclosure, a travel-related attention focus region and the sensitivity level for the driver's gaze dispersion, which serve as determination references for ascertaining the driver's state, are changed and applied in a manner adaptable to the situation. Then, when a travel situation leading to this change comes to an end, or another situation occurs, the changed travel-related attention focus region and sensitivity level for the driver's gaze dispersion are restored to their original states, respectively. Thus, a safe driving function can be provided reliably.

In addition, according to one or several embodiments of the present disclosure, in a case where the driver's gaze shifts naturally while the driver drives the vehicle, this shift is not falsely identified as the driver's gaze dispersion or driving inattentiveness. Thus, false alarms or their frequent occurrence can be prevented. Accordingly, an increase in fatigue or driving disturbance, caused by false alarms from a DMS and their frequent occurrence, can be eliminated.

### Brief Description of Drawings

FIG. 1 is a view illustrating an example of a vehicle according to an embodiment of the present disclosure.
FIG. 2 is a set of views illustrating the vehicle according to the embodiment of the present disclosure, when viewed from various angles.
FIGS. 3 and 4 are views each illustrating the interior of the vehicle according to the embodiment of the present disclosure.
FIGS. 5 and 6 are views that are referenced to describe various objects associated with the travel of the vehicle according to the embodiment of the present disclosure.
FIG. 7 is a block diagram that is referenced to describe the vehicle according to the embodiment of the present disclosure.
FIG. 8 is a block diagram illustrating an exemplary configuration of a driver monitoring apparatus according to an embodiment of the present disclosure.
FIGS. 9, 10, 11, and 12 are views illustrating various examples, respectively, where an attention focus region, which serves as a reference for monitoring a driver's state, is changed based on the operation of the driver monitoring apparatus according to the embodiment of the present disclosure.
FIG. 13 is a view illustrating that the attention focus region is changed based on information about noise in the vicinity of the vehicle, using the driver monitoring apparatus according to the embodiment of the present disclosure.
FIG. 14 is an exemplary flowchart illustrating the adjustment of the sensitivity level for a driver's gaze dispersion in a case where the driver focuses attention on a vehicular infotainment system during vehicle travel, using the driver monitoring apparatus according to the embodiment of the present disclosure.
FIG. 15 is an exemplary view illustrating the adjustment of the sensitivity level for the driver's gaze dispersion in a case where Blind Spot Detection (BSD) alert display in the vehicle is in a turned-on state, using the driver monitoring apparatus according to the embodiment of the present disclosure.
FIG. 16 is an exemplary flowchart illustrating the adjustment of the sensitivity level for the driver's gaze dispersion based on the accumulated travel time of the vehicle, using the driver monitoring apparatus according to the embodiment of the present disclosure.
FIG. 17 is an exemplary flowchart illustrating the adjustment of the sensitivity level for the driver's gaze dispersion based on the travel speed of the vehicle, using the driver monitoring apparatus according to the embodiment of the present disclosure.
FIG. 18 is an exemplary view illustrating the adjustment of the sensitivity level for the driver's gaze dispersion based on the steering direction of the vehicle, using the driver monitoring apparatus according to the embodiment of the present disclosure.
FIG. 19 is an exemplary view illustrating the adjustment of the sensitivity level for the driver's gaze dispersion during a vehicle U-turn, using the driver monitoring apparatus according to the embodiment of the present disclosure.
FIG. 20 is a view illustrating the adjustment of a range of a travel-related attention focus region for the driver during vehicle travel on a sloped road, using the driver monitoring apparatus according to the embodiment of the present disclosure.

### Mode for the Invention

Embodiments disclosed in the present specification will be described in detail below with reference to the accompanying drawings, and regardless of figure numbers, the same or similar constituent elements are given the same reference number, and descriptions thereof are not repeated. The terms 'module' and 'unit' are hereinafter interchangeably or individually used to refer to a constituent element only for convenience in description in the present specification and therefore are not themselves intended to take on different meanings or to depict different functions. In addition, when describing the embodiments disclosed in the present specification, a detailed description of a related well-known technology will be omitted if it is determined that it would obscure the nature and gist of the present disclosure. In addition, when describing the embodiments disclosed in the present specification, a detailed description of a related well-known technology will be omitted if it is determined that it would obscure the nature and gist of the present disclosure. In addition, the accompanying drawings are provided only to help easily understand the embodiments disclosed in the present specification. It should be understood that the technical idea disclosed in the present specification is not limited by the accompanying drawings. Furthermore, it should be understood that any alteration or equivalent of, or any substitute for, a constituent element according to an embodiment of the present disclosure, which falls within the scope of the technical idea of the present disclosure, is included within the scope of the present disclosure.

The ordinal numbers first, second, and so forth may be used to describe various elements, but they do not limit these elements. These ordinal numbers are only used to distinguish one element from another.

It should be understood that a constituent element, when referred to as 'connected to' or 'have access to' a different constituent element, may be directly connected to or have direct access to the different constituent element or may be connected to or have access to the different constituent element, with a third constituent element in between. Likewise, it should be understood that a constituent element, when referred to as 'directly connected to' or 'have direct access to' a different constituent element, may be connected to or have access to the different constituent element without a third constituent element in between.

A noun in singular form, unless it has a different meaning in context, has the same meaning as when used in its plural form.

The terms 'include,' 'have,' and the like, which are used in the present application, should be understood as indicating the presence of a feature, number, step, operation, constituent element, component, or combination thereof, without precluding the possibility of the presence or addition of one or more features, numbers, steps, operations, constituent constituents, components, or combinations thereof.

Examples of a vehicle described in the present specification may conceptually include automobiles and motorcycles. The vehicle will be described below with a focus placed on the automobile.

Examples of the vehicle described in the present specification may conceptually include all vehicles, such as internal combustion engine vehicles having an engine as a power source, hybrid vehicles having an engine and an electric motor as power sources, and electric vehicles having an electric motor as a power source.

In the following description, the left side of the vehicle refers to the left side in the travel direction of the vehicle, and the right side of the vehicle refers to the right side in the travel direction.

"Travel information of the vehicle" disclosed in the present specification includes vehicle travel operation data and travel environment data.

At this point, the traveling operation data may include various types of data collected in a vehicle during vehicle travel, such as vehicle speed, steering angle control, brake operation, gear operation, accumulated travel time, vehicle location, the operation of a vehicular infotainment system, and the operation of an apparatus associated with safety functions. In addition, the travel environment data may include traffic information, such as road geometry information of the vehicle's travel road, traffic volume along the travel road, and traveling speed, and surrounding environment data, such as weather information, ambient sound around the vehicle, and ambient light.

In addition, an "attention focus region" or a "travel-related attention focus region" that is disclosed in the present specification may refer to a region where a driver' gaze remains during vehicle travel or to a region where the driver's gaze is required to remain to ensure safe driving. Throughout the present disclosure, the "attention focus region" or the "travel-related attention focus region" may mostly refer to a gaze region that is monitored to ascertain the driver's state. In this case, for example, the extent of the driver's gaze dispersion may be ascertained by monitoring whether or not the driver's gaze direction falls within the "attention focus region" or the "travel-related attention focus region."

In addition, the determination of the "driver's state" disclosed in the present specification may refer to the determination of one or more of the following: a driver's alert state (the extent of alertness), an expected drowsiness state, or a driving inattentiveness state. The "driver's state" may be determined continuously, cumulatively, and in real time during vehicle travel.

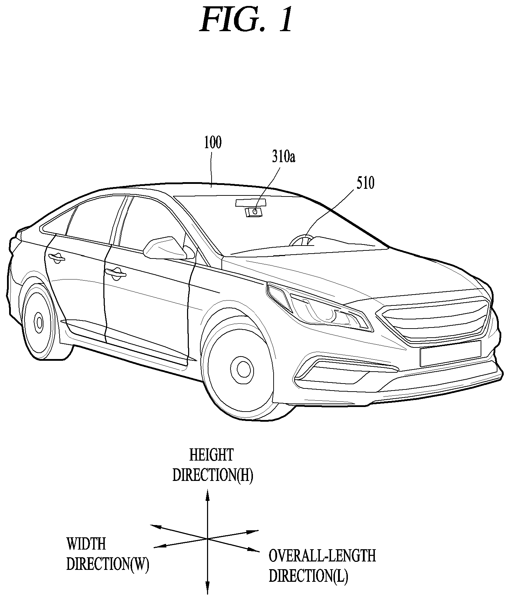

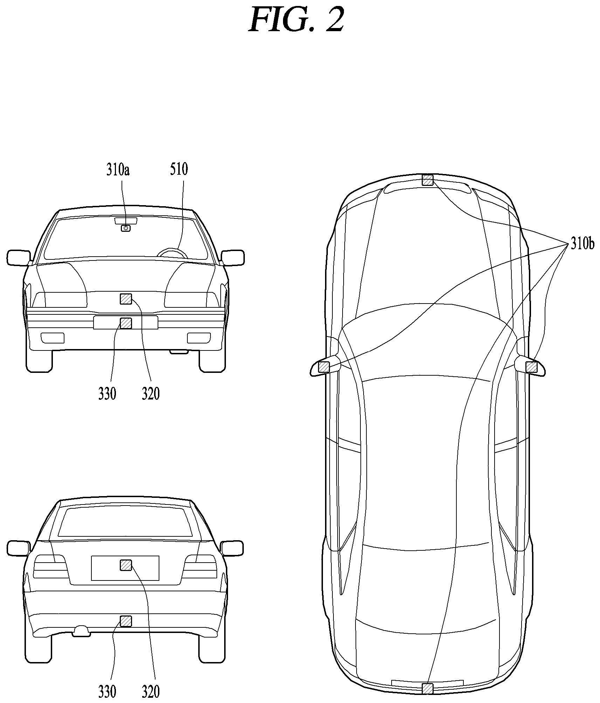

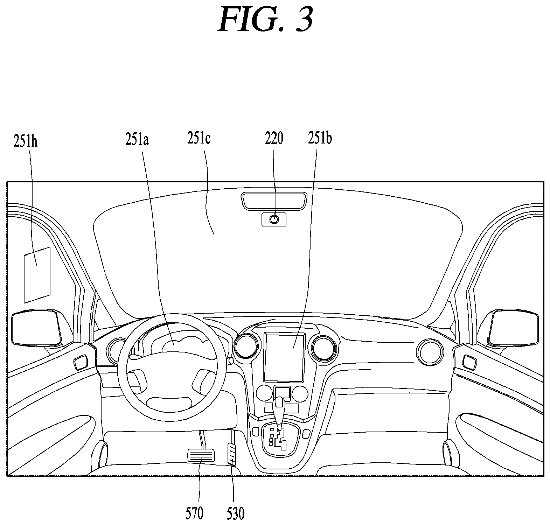

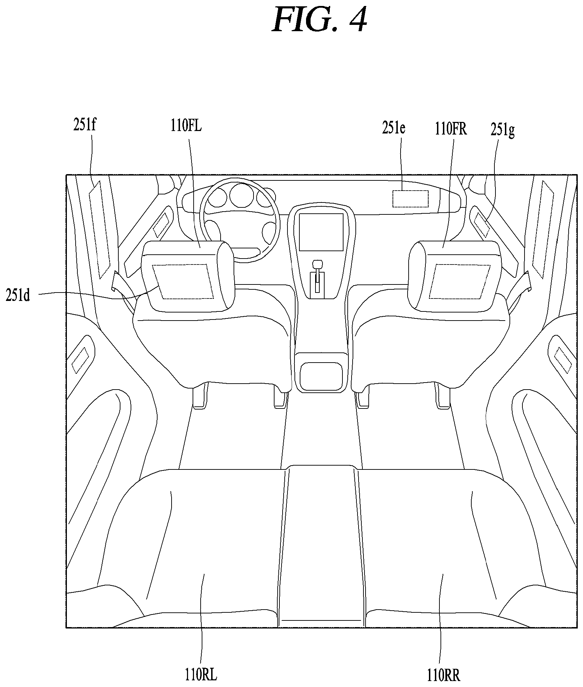

FIGS. 1 and 2 are views each illustrating the exterior of a vehicle according to an embodiment of the present disclosure. FIGS. 3 and 4 are views each illustrating the interior of the vehicle according to the embodiment of the present disclosure.

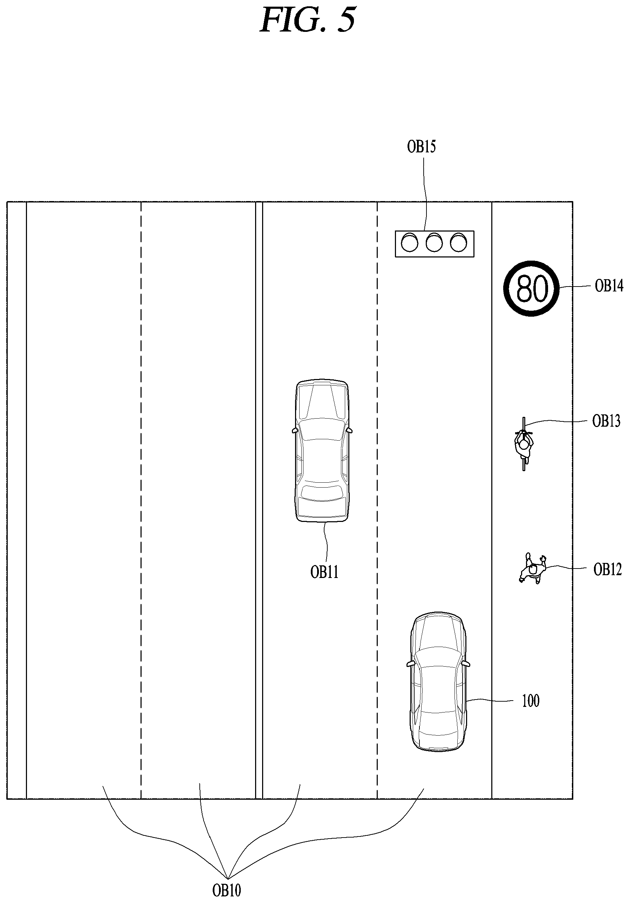

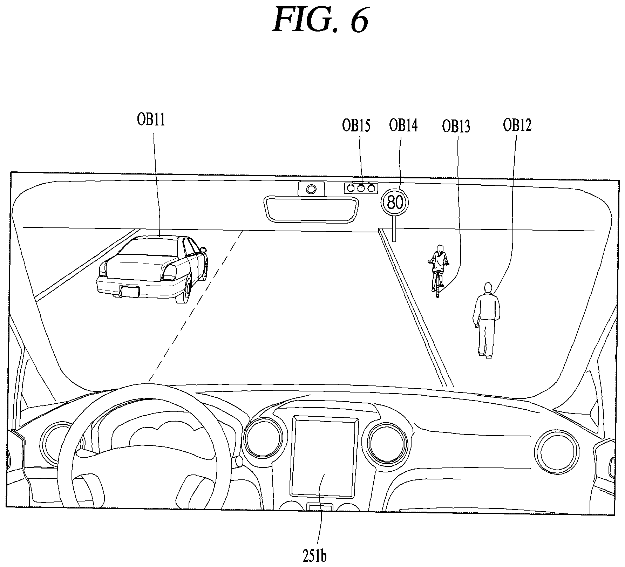

FIGS. 5 and 6 are views each illustrating various objects associated with the travel of the vehicle according to the embodiment of the present disclosure.

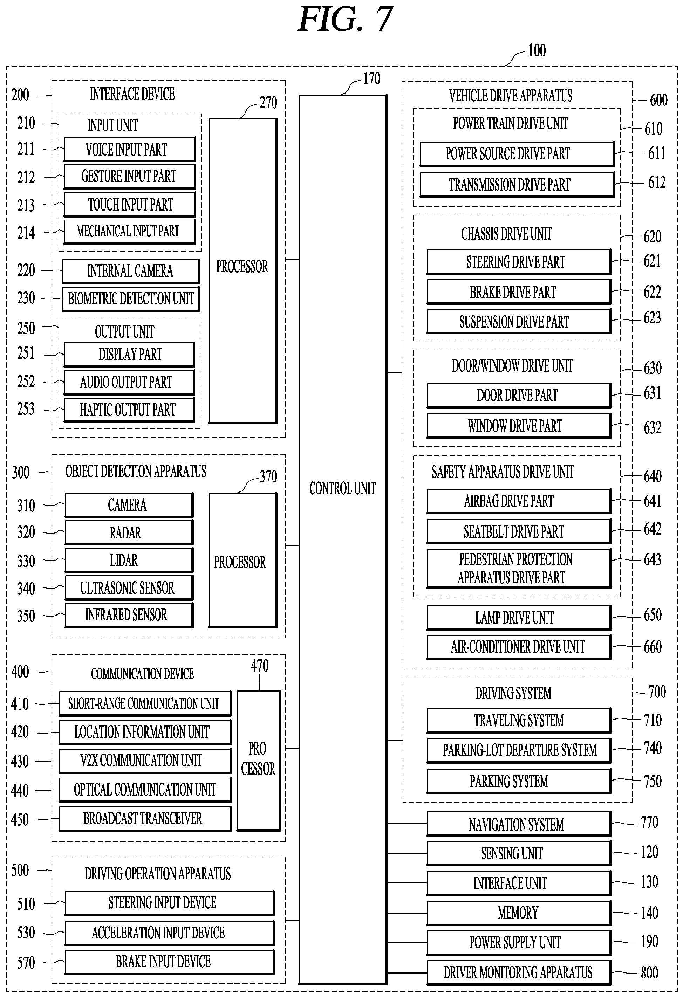

FIG. 7 is a block diagram that is referenced to describe the vehicle according to the embodiment of the present disclosure. FIG. 7 is a block diagram that is referenced to describe the vehicle according to the embodiment of the present disclosure.

With reference to FIGS. 1 to 7, a vehicle 100 may include wheels that rotate by a power source and a steering input device 510 for adjusting the driving direction of the vehicle 100.

The vehicle 100 may be an autonomous traveling vehicle. The vehicle 100 may switch to an autonomous traveling mode or a manual mode on the basis of user input. For example, the vehicle 100 may switch from the manual mode to the autonomous traveling mode or from the autonomous traveling mode to the manual mode on the basis of user input through a user interface device 200 (hereinafter referred to as a 'user terminal')

The vehicle 100 may switch to the autonomous traveling mode or the manual mode on the basis of the traveling situation information. The traveling situation information may be generated on the basis of object information provided by an object detection apparatus 300. For example, the vehicle 100 may switch from the manual mode to the autonomous traveling mode or from the autonomous traveling mode to the manual mode on the basis of the traveling situation information generated by the object detection apparatus 300. For example, the vehicle 100 may switch from the manual mode to the autonomous traveling mode or from the autonomous traveling mode to the manual mode on the basis of the traveling situation information through a communication device 400.

The vehicle 100 may switch from the manual mode into the autonomous traveling mode or from the autonomous traveling mode to the manual mode on the basis of information, data, signals, all of which are provided by an external device.

In a case where the vehicle 100 may be driven in the autonomous traveling mode, the vehicle 100 may be driven through the use of a driving system 700. For example, the vehicle 100 may be driven on the basis of information, data, and signals, all of which are generated by a traveling system 710, a parking-lot departure system 740, and a parking system 750.

When the vehicle 100 is driven in the manual mode, the vehicle 100 may receive the user input for driving through a driving operation apparatus 500. The vehicle 100 may be driven on the basis of the user input received through the driving operation apparatus 500.

The overall length refers to the length from the front end to the rear end of the vehicle 100, the width refers to the width of the vehicle 100, and the height refers to the length from the bottom of the wheel to the roof. In the following description, an overall-length direction L may refer to a direction which serves as a reference for measuring the overall length of the vehicle 100, a width direction W may refer to a direction that serves as a reference for measuring the width of the vehicle 100, and a height direction H may refer to a direction that serves as a reference for measuring the height of the vehicle 100.

As illustrated in FIG. 7, the vehicle 100 may include the user interface device (hereinafter referred to as the 'user terminal') 200, the object detection apparatus 300, the communication device 400, the driving operation apparatus 500, a vehicle drive apparatus 600, a driving system 700, a navigation system 770, a sensing unit 120, a vehicular interface unit 130, a memory 140, a control unit 170 and a power supply unit 190.

According to an embodiment, the vehicle 100 may further include one or more constituent elements in addition to constituent elements described in the present specification or may omit one or more of the described constituent elements.

The user interface device 200 is a device for communication between the vehicle 100 and the user. The user interface device 200 may receive the user input and may provide generated by the vehicle 100 to the user. The vehicle 100 may implement a user interface (UI) or user experience (UX) through the user interface device (hereinafter referred to as the 'user terminal') 200.

The user interface device 200 may include an input unit 210, an internal camera 220, a biometric detection unit 230, an output unit 250, and a processor 270. According to an embodiment, the user interface device 200 may further include one or more constituent elements in addition to constituent elements described in the present specification or may omit one or more of the described constituent elements.

The input unit 210 serves to receive information, as input, from the user. Data collected in the input unit 210 may be analyzed by the processor 270 and processed into a user's control command.

The input unit 210 may be arranged inside the vehicle 100. For example, the input unit 210 may be arranged on one region of the steering wheel, one region of the instrument panel, one region of the seat, one region of each pillar, one region of the door, one region of the center console, one region of the headlining, one region of the sun visor, one region of the windshield, one region of the window, or one region of a similar location.

The input unit 210 may include a voice input part 211, a gesture input part 212, a touch input part 213, and a mechanical input part 214.

The voice input part 211 may convert a user's voice input into an electric signal. The electric signal, resulting from the conversion, may be provided to the processor 270 or the control unit 170. The voice input part 211 may include at least one microphone.

The gesture input part 212 may convert a user's gesture input into an electric signal. The electric signal, resulting from the conversion, may be provided to the processor 270 or the control unit 170.

The gesture input part 212 may include at least one of the following: an infrared sensor or an image sensor, each of which is for detecting the user's gesture input. According to an embodiment, the gesture input part 212 may detect a user's three-dimensional (3D) gesture input. To this end, the gesture input part 212 may include a light-emitting diode, which emits a plurality of infrared rays, or a plurality of image sensors.

The gesture input part 212 may detect the user's 3D gesture input through a time of flight (TOF) method, a structured light method, or a disparity method.

The touch input part 213 may convert the user's touch input into an electric signal. The electric signal, resulting from the conversion, may be provided to the processor 270 or the control unit 170.

The touch input part 213 may include a touch sensor for detecting the user's touch input. According to an embodiment, the touch input part 213 may be integrally formed with a display part 251, thereby implementing a touch screen. This touch screen may provide both an input interface and an output interface between the vehicle 100 and the user.

The mechanical input part 214 may include at least one of the following: a button, a dome switch, a jog wheel, or a jog switch. An electric signal generated by the mechanical input part 214 may be provided to the processor 270 or the control unit 170. The mechanical input part 214 may be arranged on a steering wheel, a center fascia, a center console, a cockpit module, a door, and the like.

The internal camera 220 may acquire an image of the interior of the vehicle 100. The processor 270 may detect a user's state on the basis of the image of the interior of the vehicle 100. The processor 270 may acquire the user's gaze information from the image of the interior of the vehicle 100. The processor 270 may detect the user's gesture from the image of the interior of the vehicle 100.

The biometric detection unit 230 may acquire the user's biometric information. The biometric detection unit 230 may include a sensor for acquiring the user's biometric information and may acquire the user's fingerprint information, heart rate information, and the like using the sensor. The biometric information may be used for user authentication.

The output unit 250 may generate an output associated with sight, hearing, or touch. The output unit 250 may include at least one of the following: the display part 251, an audio output part 252, or a haptic output part 253.

The display part 251 may output graphic objects corresponding to various types of information. The display part 251 may include at least one of the following: a liquid crystal display (LCD), a thin film transistor-LCD (TFT LCD), an organic light-emitting diode (OLED), a flexible display, a three-dimensional (3D) display, or an e-ink display.

The display part 251 may be inter-layered with, or integrally formed with, the touch input part 213, thereby implementing a touch screen.

The display part 251 may be implemented as a Head-Up Display (HUD). In a case where the display part 251 may be implemented as the HUD, the display part 251 may be equipped with a projection module and thus may output information through an image that is projected onto a window shield or a window.

An example of the display part 251 may be a transparent display. The transparent display may be attached to the windshield or the window. The transparent display may have a predetermined degree of transparency and may output a predetermined screen thereon. The transparent display may include at least one of the following: a thin film electroluminescent (TFEL), a transparent organic light-emitting diode (OLED), a transparent liquid crystal display (LCD), a transmissive transparent display, or a transparent light-emitting diode (LED) display. The transparent display may have adjustable transparency.

The user interface device 200 may include a plurality of display parts, for example, display parts 251a to 251g.

The display part 251 may be arranged on one region of the steering wheel, one region 521a, 251b, or 251e of the instrument panel, one region 251d of the seat, one region 251f of each pillar, one region 251g of the door, one region of the center console, one region of the headlining, or one region of the sun visor, or may be implemented on one region 251c of the windshield, or one region of the window.

The audio output part 252 converts an electric signal provided from the processor 270 or the control unit 170 into an audio signal and outputs the audio signal. To this end, the audio output part 252 may include at least one speaker.

The haptic output part 253 generates a tactile output. For example, the haptic output part 253 may operate to vibrate the steering wheel, the safety belt, and the seats 110FL, 110FR, 110RL, and 110RR, thereby enabling the user to recognize the vibration output.

The processor (hereinafter referred to as the 'control unit') 270 may control the overall operation of each unit of the user interface device 200. According to an embodiment, the user interface device 200 may include a plurality of processors 270 or may not include any processor 270.

In a case where the processor 270 is not included in the user interface device 200, the user interface device 200 may operate under the control of a processor of another apparatus within the vehicle 100 or under the control of the control unit 170.

The user interface device 200 may be referred to as a vehicular display apparatus. The user interface device 200 may operate under the control of the control unit 170.

The object detection apparatus 300 is an apparatus for detecting an object positioned (or located) outside the vehicle 100. Examples of the object may include a variety of things associated with the driving of the vehicle 100. With reference to FIGS. 5 and 6, examples of an object O may include a traffic lane OB10, a different vehicle OB11, a pedestrian OB12, a two-wheeled vehicle OB13, traffic signals OB14 and OB15, ambient light, a road, a structure, a speed bump, a terrain feature, an animal, and the like.

The lane OB10 may be a travel lane, a lane adjacent to the travel lane, or a lane along which another vehicle in the opposite direction travels. The lane OB10 may conceptually include the left and right boundary lines forming a lane.

The different vehicle OB11 may be a vehicle which travels in the vicinity of the vehicle 100. The different vehicle OB11 may be a vehicle positioned within a predetermined distance from the vehicle 100. For example, the different vehicle OB11 may be a vehicle which travels ahead of or behind the vehicle 100.

The pedestrian OB12 may be a person located in the vicinity of the vehicle 100. The pedestrian OB12 may be a person located within a predetermined distance from the vehicle 100. For example, the pedestrian OB12 may be a person located on a sidewalk or roadway.

The two-wheeled vehicle OB12 may be a person-carrying vehicle that is located in the vicinity of the vehicle 100 and moves on two wheels. The two-wheeled vehicle OB12 may be a person-carrying vehicle that is positioned within a predetermined distance from the vehicle 100 and has two wheels. For example, the two-wheeled vehicle OB13 may be a motorcycle or a bicycle that is positioned on a sidewalk or roadway.

Examples of the traffic signal may include a traffic light OB15, a traffic sign OB14, and a pattern or text drawn on a road surface.

The ambient light may be light generated from a lamp provided on another vehicle. The ambient light may be light generated from a street lamp. The ambient light may be solar light.

Examples of road features may include surfaces, curves, upward slopes, downward slopes, and the like.

The structure may be an object positioned (or located) in the vicinity of a road and fixed on the ground. Examples of the structure may include a street lamp, a roadside tree, a building, an electric pole, a traffic light, a bridge, and the like.

Examples of the terrain feature may include a mountain, a hill, and the like.

Objects may be categorized into moving objects and stationary objects. Examples of the moving object may conceptually include another vehicle and a pedestrian. Examples of the stationary object may include a traffic signal, a road, and a structure.

The object detection apparatus 300 may include a camera 310, a radar 320, a LiDAR 330, an ultrasonic sensor 340, an infrared sensor 350, and a processor 370.

According to an embodiment, the object detection apparatus 300 may further include one or more constituent elements in addition to constituent elements described in the present specification or may omit one or more of the described constituent elements.

The camera 310 may be positioned in an appropriate portion of the exterior of the vehicle to acquire an image of the surroundings of the vehicle 100. The camera 310 may be a mono camera, a stereo camera 310a, an Around View Monitoring (AVM) camera 310b, or a 360-degree camera.

For example, the camera 310 may be arranged adjacent to a front windshield within the vehicle 100 to acquire an image of the surroundings in front of the vehicle 100. Alternatively, the camera 310 may be arranged in the vicinity of the front bumper or the radiator grill.

For example, the camera 310 may be arranged adjacent to a rear glass pane within the vehicle 100 to acquire an image of the surroundings behind the vehicle100. Alternatively, the camera 310 may be arranged adjacent to the rear bumper, the trunk, or the tailgate.

For example, the camera 310 may be arranged adjacent to at least one of the side windows within the vehicle 100 to acquire an image of the surroundings alongside the vehicle 100. Alternatively, the camera 310 may be arranged in the vicinity of the side mirror, the fender, or the door.

The camera 310 may provide an acquired image to the processor 370.

The radar 320 may include an electromagnetic wave transmission unit and an electromagnetic wave reception unit. The radar 320 may be implemented in compliance with a pulse radar scheme or a continuous wave radar scheme according to the principle of emitting a radio wave. The radar 320 may be implemented in compliance with a Frequency Modulated Continuous Wave (FMCW) scheme or a Frequency Shift Keying (FSK) scheme, each of which is among continuous wave radar schemes, according to a signal waveform.

The radar 320 may detect an object using a time of flight (TOF) technique or a phase-shift technique, with an electromagnetic wave as a medium, and may detect the location of the detected object, the distance to the detected object, and the relative speed with respect to the detected object.

The radar 320 may be arranged in an appropriate position on the exterior of the vehicle 100 to detect an object positioned (or located) in front of, behind, or alongside the vehicle 100.

The LiDAR 330 may include a laser transmission unit and a laser reception unit. The LiDAR 330 may be implemented using a time of flight (TOF) technique or a phase-shift technique.

The LiDAR 330 may be implemented as a drive-type or non-drive-type LiDAR.

In a case where the LiDAR 330 may be implemented as a drive-type LiDAR, the LiDAR 330 may be rotated by a motor and may detect an object in the vicinity of the vehicle 100.

In a case where the LiDAR 330 is implemented as a non-drive-type LiDAR, the LiDAR 330 may detect, through light steering, an object positioned (or located) within a predetermined range of the vehicle 100. The vehicle 100 may include a plurality of non-drive-type LiDARs 330.

The LiDAR 330 may detect an object using a time of flight (TOF) technique or a phase-shift technique, with laser light as a medium, and may detect the location of the detected object, the distance to the detected object, and the relative speed with respect to the detected object.

The radar 330 may be arranged in an appropriate position on the exterior of the vehicle 100 to detect an object positioned (or located) in front of, behind, or alongside the vehicle 100.

The ultrasonic sensor 340 may include an ultrasonic wave transmission unit and an ultrasonic wave reception unit. The ultrasonic sensor 340 may detect an object using an ultrasonic wave and may detect the position of the detected object, the distance to the detected object, and the relative speed with respect to the detected object.

The ultrasonic sensor 340 may be arranged in an appropriate position on the exterior of the vehicle 100 to detect an object positioned (or located) in front of, behind, or alongside the vehicle 100.

The infrared sensor 350 may include an infrared ray transmission unit and an infrared ray reception unit. The infrared sensor 340 may detect an object on the basis of infrared light, and may detect the location of the detected object, the distance from the detected object, and the relative speed with the detected object.

The infrared sensor 350 may be arranged in an appropriate position on the exterior of the vehicle 100 to detect an object positioned (or located) in front of, behind, or alongside the vehicle 100.

The processor 370 may control the overall operation of each unit of the object detection apparatus 300.

The processor 370 may detect an object on the basis of an acquired image and may track the object. The processor 370 may perform operations, such as calculating the distance to an object and calculating the relative speed with respect to the object, through an image processing algorithm.

The processor 370 may detect an object on the basis of a reflected electromagnetic wave, resulting from an emitted electromagnetic wave being reflected off the object, and may track the object. The processor 370 may perform operations, such as calculating the distance to an object and calculating the relative speed with respect to the object, on the basis of the electromagnetic wave.

The processor 370 may detect an object on the basis of a reflected laser beam, resulting from an emitted laser being reflected off the object, and may track the object. The processor 370 may perform operations, such as calculation of a distance to the object and calculation of a relative speed with respect to the object, on the basis of the laser beam.

The processor 370 may detect an object on the basis of a reflected ultrasonic wave, resulting from an emitted ultrasonic wave being reflected off the object, and may track the object. The processor 370 may perform operations, such as calculation of a distance to the object and calculation of a relative speed with respect to the object, on the basis of the ultrasonic wave.

The processor 370 may detect an object on the basis of reflected infrared light, resulting from emitted infrared light being reflected off the object, and may track the object. The processor 370 may perform operations, such as calculation of a distance to the object and calculation of a relative speed with respect to the object, on the basis of the infrared light.

According to an embodiment, the object detection apparatus 300 may include a plurality of processors 370 or may not include any processor 370. For example, each of the following: the camera 310, the radar 320, the LiDAR 330, the ultrasonic sensor 340, and the infrared sensor 350 may include its processor individually.

In a case where the processor 370 is not included in the object detection apparatus 300, the object detection apparatus 300 may operate under the control of a processor of an apparatus within the vehicle 100 or under the control of the control unit 170.

The object detection device 400 may operate under the control of the control unit 170.

The communication device 400 is a device for performing communication with an external device. The external device here may be another vehicle, a mobile terminal, or a server.

To perform communication, the communication device 400 may include a transmission antenna, a reception antenna, and at least one of the following: a radio frequency (RF) circuit or an RF device, each of which is capable of implementing various communication protocols.

The communication device 400 may include a short-range communication unit 410, a location information unit 420, a V2X communication unit 430, an optical communication unit 440, a broadcast transceiver 450, and a processor 470.

According to an embodiment, the communication device 400 may further include one or more constituent elements in addition to constituent elements in the present specification or may omit one or more of the described constituent elements.

The short-range communication unit 410 is a unit for short-range communication. The short-range communication unit 410 may support short-range communication using at least one of the following technologies: Bluetooth^{™} Radio Frequency IDentification (RFID), Infrared Data Association (IrDA), Ultra-Wide Band (UWB), Zig Bee, Near Field Communication (NFC), Wireless-Fidelity (Wi-Fi), Wi-Fi Direct, or Wireless Universal Serial Bus (USB).

The short-range communication unit 410 may form short-range wireless area networks and may perform short-range communication between the vehicle 100 and at least one external device.

The location information unit 420 is a unit for acquiring location information of the vehicle 100. For example, the location information unit 420 may include a Global Positioning System (GPS) module or a Differential Global Positioning System (DGPS) module.

The V2X communication unit 430 is a unit for performing wireless communications with a server (Vehicle to Infrastructure, V2I), another vehicle (Vehicle to Vehicle, V2V), or a pedestrian (Vehicle to Pedestrian, V2P). The V2X communication unit 430 may include an RF circuit capable of implementing protocols for communication with infrastructure (V2I), communication between vehicles (V2V), and communication with a pedestrian (V2P).

The optical communication unit 440 is a unit for performing communication with an external device, with light as a medium. The optical communication unit 440 may include an optical transmission part for converting an electric signal into an optical signal and externally transmitting the optical signal, and an optical reception part for converting the received optical signal back into an electric signal.

According to an embodiment, the optical transmission part may be formed integrally with a lamp provided on the vehicle 100.

The broadcast transceiver 450 is a unit for receiving a broadcast signal from an external broadcast management server or transmitting a broadcast signal to the broadcast managing server over a broadcast channel. The broadcast channel may include a satellite channel, a terrestrial channel, or both. The broadcast signal may include a TV broadcast signal, a radio broadcast signal, and a data broadcast signal.

The processor 470 may control the overall operation of each unit of the communication device 400.

According to an embodiment, the communication device 400 may include a plurality of processors 470 or may not include any processor 470.

In a case where the processor 470 is not included in the communication device 400, the communication device 400 may operate under the control of a processor of another device within the vehicle 100 or under the control of the control unit 170.

The communication device 400, along with the user interface device 200, may implement a vehicular display device. In this case, the vehicular display device may be referred to as a telematics device or an Audio Video Navigation (AVN) device.

The communication device 400 may operate under the control of the control unit 170.

The driving operation apparatus 500 is an apparatus for receiving user input for driving.

In the manual mode, the vehicle 100 may be driven on the basis of a signal provided by the driving operation apparatus 500.

The driving operation apparatus 500 may include the steering input device 510, an acceleration input device 530, and a brake input device 570.

The steering input device 510 may receive an input regarding the driving direction of the vehicle 100 from the user. The steering input device 510 is preferably configured in the form of a wheel, allowing a steering input by the wheel's rotation. According to an embodiment, the steering input apparatus may also be configured in the shape of a touch screen, a touchpad, or a button.

The acceleration input apparatus 530 may receive an input for accelerating the vehicle 100 from the user. The brake input apparatus 570 may receive an input for decelerating the vehicle 100 from the user. The acceleration input apparatus 530 and the brake input apparatus 570 are preferably configured in the shape of a pedal. According to an embodiment, the acceleration input apparatus or the brake input apparatus may also be configured in the shape of a touch screen, a touchpad, or a button.

The driving operation apparatus 500 may operate under the control of the control unit 170.

The vehicle drive apparatus 600 is an apparatus that electrically controls driving of the various apparatuses within the vehicle 100.

The vehicle drive apparatus 600 may include a power train drive unit 610, a chassis drive unit 620, a door/window drive unit 630, a safety apparatus drive unit 640, a lamp drive unit 650, and an air-conditioner drive unit 660.

According to an embodiment, the vehicle drive apparatus 600 may further include one or more constituent elements in addition to constituent elements in the present specification or may omit one or more of the described constituent elements.

The vehicle drive apparatus 600 may include a processor. Each unit of the vehicle drive apparatus 600 may individually include its processor.

The power train drive unit 610 may control the operation of a power train apparatus.

The power train drive unit 610 may include a power source drive part 611 and a transmission drive part 612.

The power source drive part 611 may execute control on the power source of the vehicle 100.

For example, in a case where the power source of the vehicle 100 is a fossil fuel-based engine, the power source drive part 611 may execute electronic control on the engine. Accordingly, the output torque and other parameters of the engine may be controlled. The power source drive part 611 may adjust the engine output torque under the control of the control unit 170.

For example, in a case where the power source of the vehicle 100 is an electric energy-based motor, the power source drive part 611 may execute control on the motor. The power source drive part 611 may adjust a rotational speed, torque, and other parameters of the motor under the control of the control unit 170.

The transmission drive part 612 may execute control on a transmission. The transmission drive gearbox part 612 may adjust the state of the transmission. The transmission drive part 612 may change the state of the transmission to Drive (D), Reverse (R), Neutral (N), or Park (P).

In a case where the power source of the vehicle 100 is an engine, the transmission drive part 612 may adjust the engaged state of a gear in Drive (D).

The chassis drive unit 620 may control the operation of a chassis apparatus. The chassis drive unit 620 may include a steering drive part 621, a brake drive part 622, and a suspension drive part 623.

The steering drive part 621 may execute electronic control on a steering apparatus within the vehicle 100. The steering drive part 621 may change the driving direction of the vehicle 100.

The brake drive part 622 may execute electronic control on a brake apparatus within the vehicle 100. For example, the brake drive part 622 may reduce the speed of the vehicle 100 by controlling the operation of the brakes provided on the wheels.

The brake drive part 622 may individually control each of the brakes. The brake drive part 622 may control braking forces applied to the wheels so that they differ from one another.

The suspension drive part 623 may execute electronic control on a suspension apparatus within the vehicle 100. For example, in a case where a road surface is uneven, the suspension drive part 623 may reduce vibration of the vehicle 100 by controlling the suspension apparatus. The suspension drive part 623 may individually control each of the plurality of suspensions.

The door/window drive unit 630 may execute electronic control on a door apparatus or a window apparatus within the vehicle 100.

The door/window drive unit 630 may include a door drive part 631 and a window drive part 632.

The door drive part 631 may execute control on the door apparatus. The door drive part 631 may control the opening or closing of the plurality of doors included in the vehicle 100. The door drive part 631 may control the opening or closing of the trunk or the tailgate. The door drive part 631 may control the opening or closing of the sunroof.

The window drive part 632 may execute electronic control on the window apparatus. The window drive part 632 may control the opening or closing of the plurality of windows included in the vehicle 100.

The safety apparatus drive unit 640 may execute electronic control on the various safety apparatuses within the vehicle 100.

The safety apparatus drive unit 640 may include an airbag drive part 641, a seatbelt drive part 642, and a pedestrian protection apparatus drive part 643.

The airbag drive part 641 may execute electronic control on the airbag apparatus within the vehicle 100. For example, when a risk is detected, the airbag drive part 641 may control the airbag to deploy.

The seatbelt drive part 642 may execute electronic control on the seatbelt apparatus within the vehicle 100. For example, when a risk is detected, the seatbelt drive part 642 may secure the occupants in seats 110FL, 110FR, 110RL, and 110RR by tightening seatbelts.

The pedestrian protection apparatus drive part 643 may execute electronic control on the hood lift and the pedestrian airbag. For example, when a collision with a pedestrian is detected, the pedestrian protection apparatus drive part 643 may control the hood lift and the pedestrian airbag to deploy.

The lamp drive part 650 may execute electronic control on the various lamp apparatuses within the vehicle 100.

The air-conditioner drive unit 660 may execute electronic control on the air conditioner within the vehicle 100. For example, when the temperature inside the vehicle 100 is high, the air-conditioner drive unit 660 may control the air conditioner to operate in such a manner as to supply cool air into the vehicle 100.

The vehicle drive apparatus 600 may include a processor. Each unit of the vehicle drive apparatus 600 may individually include its processor.

The vehicle drive apparatus 600 may operate under the control of the control unit 170.

The driving system 700 is a system that controls various driving functions of the vehicle 100. The driving system 700 may operate in the autonomous traveling mode.

The driving system 700 may include the traveling system 710, the parking-lot departure system 740, and the parking system 750.

According to an embodiment, the driving system 700 may further include one or more constituent elements in addition to constituent elements described in the present disclosure or may emit one or more of the described constituent elements.

The driving system 700 may include a processor. Each unit of the driving system 700 may individually include its processor.

According to an embodiment, in a case where the driving system 700 may be implemented in software, the driving system 700 may also conceptually operate at a lower level than the control unit 170.

According to an embodiment, the driving system 700 may conceptually include at least one of the following: the user interface device 200, the object detection apparatus 300, the communication device 400, the vehicle drive apparatus 600, or the control unit 170.

The traveling system 710 may enable the vehicle 100 to travel.

The traveling system 710 may receive navigation information from a navigation system 770, may provide a control signal to the vehicle drive apparatus 600, and may enable the vehicle 100 to travel. The traveling system 710 may receive object information from the object detection apparatus 300, provide a control signal to the vehicle drive apparatus 600, and enable the vehicle 100 to travel. The traveling system 710 may receive a signal from an external device through the communication device 400, provide a control signal to the vehicle drive apparatus 600, and enable the vehicle 100 to travel.

The parking-lot departure system 740 may perform a departure maneuver for the vehicle 100.

The parking-lot departure system 740 may receive navigation information from the navigation system 770, may provide a control signal to the vehicle drive apparatus 600, and may perform a departure maneuver for the vehicle 100. The parking-lot departure system 740 may receive object information from the object detection apparatus 300, provide a control signal to the vehicle drive apparatus 600, and perform a departure maneuver for the vehicle 100. The parking-lot departure system 740 may receive a signal from an external device through the communication device 400, provide a control signal to the vehicle drive apparatus 600, and perform a departure maneuver for the vehicle 100.

The parking system 750 may perform a parking maneuver for the vehicle 100.

The parking system 750 may receive navigation information from the navigation system 770, may provide a control signal to the vehicle drive apparatus 600, and may perform a parking maneuver for the vehicle 100. The parking system 750 may receive object information from the object detection apparatus 300, provide a control signal to the vehicle drive apparatus 600, and perform a parking maneuver for the vehicle 100. The parking system 750 may receive a signal from an external device through the communication device 400, provide a control signal to the vehicle drive apparatus 600, and perform a parking maneuver for the vehicle 100.

The navigation system 770 may provide navigation information. The navigation information may include at least one of the following: map information, set-destination information, path information based on the set destination, information about various objects on a path, lane information, or current vehicular location information.

The navigation system 770 may include a memory and a processor. The navigation information may be stored in the memory. The processor may control the operation of the navigation system 770.

According to an embodiment, the navigation system 770 may update pre-stored information by receiving information from an external device through the communication device 400.

According to an embodiment, the navigation system 770 may also be categorized as a sub-constituent element of the user interface device 200.

The sensing unit 120 may sense the state of the vehicle 100. The sensing unit 120 may include a posture sensor (for example, a yaw sensor, a roll sensor, a pitch sensor, or the like), a collision sensor, a wheel sensor, a speed sensor, a tilt sensor, a weight-detection sensor, a heading sensor, a gyro sensor, a position module, a vehicle forward/backward movement sensor, a battery sensor, a fuel sensor, a tire sensor, a steering sensor sensing the turning of a steering wheel, an in-vehicle temperature sensor, an in-vehicle humidity sensor, an ultrasonic sensor, an illumination sensor, an accelerator position sensor, a brake pedal position sensor, and other sensors.

The sensing unit 120 may acquire vehicular posture information, vehicular collision information, vehicular direction information, vehicular location information (GPS information), vehicular angle information, vehicular speed information, vehicular acceleration information, vehicular tilt information, vehicular forward/backward movement information, battery information, fuel information, tire information, vehicular lamp information, in-vehicle temperature information, and in-vehicle humidity information. Furthermore, the sensing unit 120 may acquire signals that result from sensing a steering wheel rotation angle, outside-vehicle illumination, pressure applied to an acceleration pedal, pressure applied to a brake pedal, and the like.

The sensing unit 120 may further include an acceleration pedal sensor, a pressure sensor, an engine speed sensor, an airflow sensor (AFS), an air temperature sensor (ATS), a water temperature sensor (WTS), a throttle position sensor (TPS), a TDC sensor, a crank angle sensor (CAS), and other sensors.

The vehicular interface unit 130 may serve as a path to various types of external devices connected to the vehicle 100. For example, the vehicular interface unit 130 may include a port that enables a connection with a mobile terminal and may be connected to the mobile terminal through the port. In this case, the vehicular interface unit 130 may exchange data with the mobile terminal.

The vehicular interface unit 130 may serve as a path for supplying electric energy to the connected mobile terminal. In a case where the mobile terminal is electrically connected to the vehicular interface unit 130, the vehicular interface unit 130 may supply electric energy, supplied from the power supply unit 190, to the mobile terminal under the control of the control unit 170.

The memory 140 is electrically connected to the control unit 170. Basic data for the units, control data for controlling operations of the units, and data, which are input and output, may be stored in the memory 140. Examples of the memory 140 may include various hardware storage devices, such as a ROM, a RAM, an EPROM, a flash drive, and a hard drive. Programs for processing or control by the control unit 170, and various types of data for the overall operation of the vehicle 100 may be stored in the memory 140.

According to an embodiment, the memory 140 may be configured to be integrated with the control unit 170 or may be implemented as a sub-constituent element of the control unit 170.

The control unit 170 may control the overall operation of each unit within the vehicle 100. The control unit 170 may be referred to as an Electronic Control Unit (ECU).

The power supply unit 190 may supply electric power necessary for the operation of each constituent element under the control of the control unit 170. Specifically, the power supply unit 190 may receive power supplied from the battery inside the vehicle 100, or from other sources.

At least one processor and the control unit 170, which are included in the vehicle 100, may be implemented using at least one of the following: application-specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, or electric units performing other functions.

In addition, a driver monitoring apparatus 800, which is included in the vehicle 100 or is detachably attached thereto, is configured to determine a driver's state (for example, drowsiness, inattentiveness, or the like) by monitoring the driver's gaze dispersion and to output a warning alert based on the driver's determined state.

The driver monitoring apparatus 800 may also be referred to as an improved Advanced Driver Monitoring System (DMS) or an improved Advanced Driver Monitoring Apparatus.

The driver monitoring apparatus 800 may change an attention focus region to which the driver's gaze is directed, based on the travel information of the vehicle, specifically, on vehicle travel operation data and travel environment data, thereby determining the driver's state.

For example, the driver monitoring apparatus 800 may change one or more of the following determination references: the size of the attention focus region, the location of the attention focus region, the number of attention focus regions, or the duration of the driver's fixed gaze, thereby monitoring the driver's state.

In addition, the driver monitoring apparatus 800 may adjust the sensitivity level for the driver's gaze dispersion partially occurring within the attention focus region in a manner that varies with the travel information of the vehicle, more particularly, at least one of the following: the vehicle travel operation data or the travel environment data.

For example, when the result of detecting the travel information of the vehicle indicates that the driver's gaze dispersion contributes to driving, the driver monitoring apparatus 800 may reduce the sensitivity level for the driver's gaze dispersion partially occurring within the attention focus region. When the result of detecting the travel information of the vehicle indicates that the driver's gaze dispersion interferes with driving, the driver monitoring apparatus 800 may increase the sensitivity level for the driver's gaze dispersion partially occurring within the attention focus region. Consequently, these sensitivity level adjustments may monitor the driver's state.

In addition, in this manner, the driver monitoring apparatus 800 may perform learning of the attention focus region and the driver's gaze dispersion, which serve as determination references applied in a manner that varies with the travel information of the vehicle. Accordingly, even when the same travel information is input, the attention focus region and/or the driver's gaze dispersion may be applied in such a manner that they have sensitivity level values that vary from one driver to another.

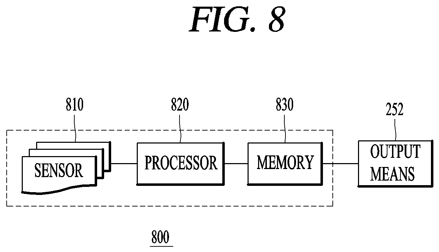

FIG. 8 is a block diagram illustrating an exemplary configuration of the driver monitoring apparatus according to an embodiment of the present disclosure.

With reference to FIG. 8, the driver monitoring apparatus 800 may be configured to include a sensor 810, a processor 820, and a memory 830 and operate in conjunction with various output means 252 of the vehicle to provide the warning alert.

Based on the travel information of the vehicle, the driver monitoring apparatus 800 may vary the attention focus region to which the driver's gaze is directed and adjust the sensitivity level for the driver's gaze dispersion partially occurring within the attention focus region.

The driver monitoring apparatus 800 may adaptively determine the extent of the driver's gaze dispersion by varying the attention focus region and/or adjusting the extent of the driver's gaze dispersion in this manner. Accordingly, this determination can prevent false triggers or frequent triggers of a gaze dispersion alarm and contribute to the driver's safe driving.

The sensor 810 may include a DSM camera that is installed on the front side of the interior of the vehicle and is configured in such a manner as to recognize the driver's face and gaze direction. In order to monitor the driver's state, the sensor 810 may acquire the driver's image data by capturing an image of the driver's face. For example, the DSM camera may acquire the driver's facial image, analyze the acquired facial image, check the driver's gaze direction, and check whether or not the driver is drowsy.

According to an embodiment, in order to ascertain the driver's state more accurately, the sensor 810 may additionally include other sensors within the vehicle, for example, a microphone, a biometric sensor, a breathing detection sensor, a posture detection sensor, and the like. However, according to the present disclosure, the extent of the driver's gaze dispersion partially occurring within the attention focus region, which serves as a determination reference for ascertaining the driver's state, may be determined by analyzing the image acquired by the above-described DSM camera or other vision sensors.

The processor 820 may receive the travel information of the vehicle through either a reception unit (not illustrated) or the sensor 810.

The receivable travel information of the vehicle may include the vehicle travel operation data and travel environment data. At this point, the traveling operation data may include various types of data collected in the vehicle during vehicle travel, such as vehicle speed, steering angle control, brake operation, gear operation, accumulated travel time, vehicle location, the operation of a vehicular infotainment system, and the operation of an apparatus associated with safety functions. In addition, the travel environment data may include traffic information, such as road geometry information of the vehicle's travel road, traffic volume along the travel road, and traveling speed, and surrounding environment data, such as weather information, ambient sound around the vehicle, and ambient light. The road geometry information may include a road longitudinal inclination, a road transverse inclination, a road curvature, and the like and be pre-stored in a predetermined service server (not illustrated). In addition, the road traffic information may be provided from, for example, a traffic information provision server (not illustrated).

The driver monitoring apparatus 800 may include a communication unit (not illustrated) that performs the function of receiving the travel information of the vehicle and transferring a control signal, corresponding to the driver's state, to an output means 252.

The communication unit may communicate over, for example, a Local Area Network (LAN), a Metropolitan Area Network (MAN), a Wide Area Network (WAN), the Internet, 2G, 3G, 4G, and LTE mobile communication networks, Bluetooth, Wi-Fi, Wibro, a satellite communication network, and a Low Power Wide Area Network (LPWAN), such as LoRa or Sigfox. The communication unit may comply with either a wired or a wireless communication scheme.

According to an embodiment, the travel information of the vehicle may also be received through an On-Board Diagnostics (OBD) interface (not illustrated), a GNSS reception module, or the like.

Based on the received travel information, the processor 820 may apply a determination reference for determining the driver's state in an adaptively variable manner.

Specifically, based on the received travel information, the processor 820 may adaptively vary the attention focus region to be monitored. Specifically, based on the received travel information, the processor 820 may change at least one of the following: the location of the attention focus region to be monitored, the size of the attention focus region, the number of attention focus regions, or the duration of the driver's gaze fixation. Furthermore, based on either the duration for which the driver's gaze direction remains within the attention focus region or the frequency with which the driver's gaze remains within the attention focus region, the processor 820 may determine the extent of the driver's gaze dispersion.

In addition, based on the received travel information, the processor 820 may adaptively adjust the sensitivity level for the driver's gaze dispersion partially occurring within the attention focus region.

In a case where, based on the received travel information, the processor 820 adjusts the sensitivity level for the driver's gaze dispersion in such a manner as to remain below an initial value, the processor 820 may further reduce either the necessary duration for which the driver's gaze is fixed to the attention focus region or the necessary number of times the driver's gaze is fixed to the attention focus region, thereby monitoring the driver's states, such as the driver's gaze dispersion.

In a case where, based on the received travel information, the processor 820 raises the sensitivity level for the driver's gaze dispersion above the initial value for the purpose of adjustment, the processor 820 may increase either the necessary duration for which the driver's gaze is fixed to the attention focus region or the necessary number of times the driver's gaze is fixed to the attention focus region, thereby monitoring the driver's states, such as the driver's gaze dispersion.

In a case where a plurality of attention focus regions are provided, the processor 820 may adjust the sensitivity level for the driver's gaze dispersion for each of the attention focus regions in such a manner that they differ from each other. For example, the sensitivity level for the driver's gaze dispersion partially occurring within the travel-related attention focus region in front of the vehicle and the sensitivity level for the driver's gaze dispersion partially occurring within the attention focus region on a rearview mirror may be adjusted in such a manner that they have different values.

The memory 830 may store various types of information, data, and programs, which are associated with the operation of the driver monitoring apparatus 800. The memory 830 may store driver monitoring data, acquired by the sensor 810, travel information of the vehicle , received through the reception unit (the sensor 810, the communication unit, the OBD interface, or the like), data, and programs. In addition, the memory 830 may train a state prediction model for each driver, which aligns with the varied determination reference, using various types of information, data, and programs, which are associated with the above-described adaptive determination reference. At this point, the memory 830 may also train the state prediction model for each driver, which aligns with the varied determination reference, by additionally utilizing big data including multiple types of data associated with vehicles, traffic, environment, and the like.

The processor 820 may generate a control signal according to the driver's state determined to align with the above-described adaptive determination reference in such a manner that an alarm for calling the driver's attention is output.

The output means 252 may include, for example, one or more of the following: an in-vehicle speaker, a warning alarm light on a dashboard, a horn, or a display. Based on the control signal generated by the processor 820, the output means 252 may also output an alert signal that makes a request to the driver for an interactive response. For example, the alert signal that makes a request to the driver for an interactive response may refer to an auditory or visual alert signal that prompts the driver's feedback response (for example, opening and closing his/her mouth or answering an arbitrary question) to help the driver focus on the vehicle travel.

After the sensitivity level for the driver's gaze dispersion is changed based on the received travel information, in response to the recognition that the cause of the change in the sensitivity level no longer exists, the processor 820 may restore the varied attention focus region and the sensitivity level (for example, initial setting values) for the driver's gaze dispersion to their original states, respectively.

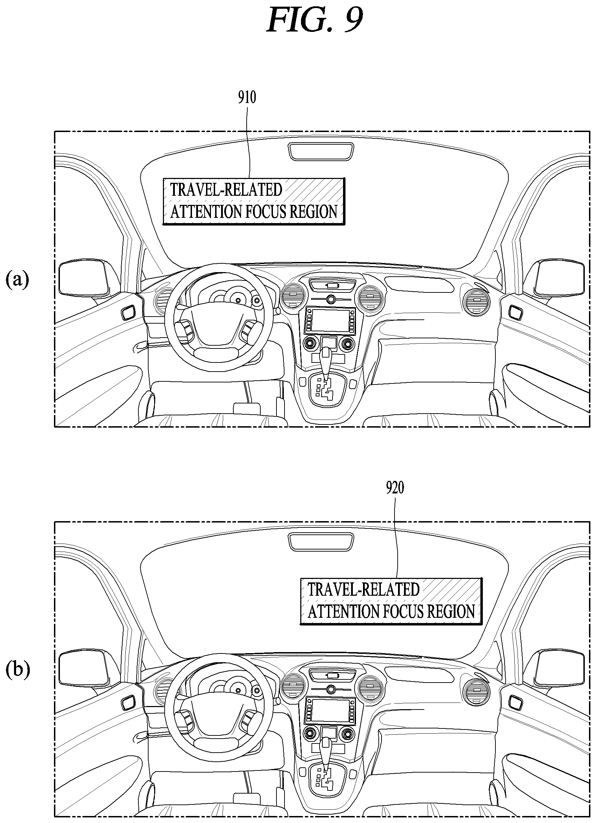

FIGS. 9, 10, 11, and 12 are views illustrating various examples, respectively, where the attention focus region, which serves as a reference for monitoring the driver's state, is changed based on the operation of the driver monitoring apparatus according to the embodiment of the present disclosure.

The driver monitoring apparatus 800 according to the present disclosure monitors the extent of the driver's gaze dispersion by monitoring whether or not the driver's gaze direction falls within the attention focus region (or the travel-related attention focus region). Normally, the attention focus region is set as a predetermined region and location, which is associated with a DMS alert, for example, as the middle region of a front windshield corresponding to the driver's seat of the vehicle.

Based on the received travel information of the vehicle, the driver monitoring apparatus 800 according to the present disclosure may adaptively change the attention focus region that serves as the reference for monitoring the driver's state.

Based on the received travel information of the vehicle, the driver monitoring apparatus 800 may change one or more of the following: the location of the attention focus region, the size of the attention focus region, the number of attention focus regions, or the duration of the driver's gaze fixation. Thereafter, based on the duration for which the driver's gaze direction remains within the attention focus region or on the frequency with which the driver's gaze remains within the attention focus region, the driver monitoring apparatus 800 may monitor the driver's state, such as drowsiness or inattentiveness, by determining the extent of the driver's gaze dispersion.

FIG. 9 illustrates an example where the location of the attention focus region is changed based on the travel information of the vehicle. For example, an attention focus region (hereinafter referred to as an 'initial attention focus region') 910 illustrated in (a) of FIG. 9 is set as the middle region of the front windshield corresponding to the driver's seat. As illustrated in (b) of FIG. 9, based on the travel information of the vehicle, the attention focus region 910 may be repositioned to the middle region 920 of the front windshield in front of the front passenger seat.

For example, as illustrated in (b) of FIG. 9, the attention focus region may be repositioned in a situation in which the driver focuses attention on the front-right of the vehicle, such as when an object approaching from the front-right of the vehicle is detected based on the received travel information. At this point, when an object moves away from the vicinity of the vehicle or toward the front-left of the vehicle, the changed attention focus region, as illustrated in (a) of FIG. 9, may be restored to its original state.

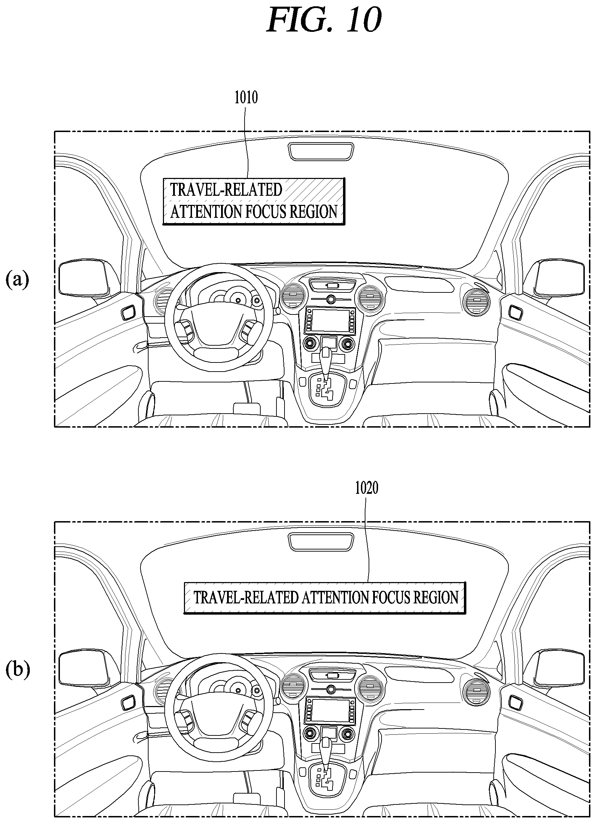

FIG. 10 illustrates an example where the size of the attention focus region is changed based on the travel information of the vehicle. For example, as illustrated in (b) of FIG. 10, based on the travel information of the vehicle, an initial attention focus region 1010 illustrated in (a) of FIG. 10 may be changed to an attention focus region 1020 expanded from the initial attention focus region up to the front windshield in front of the front passenger seat.

For example, as illustrated in (b) of FIG. 10, the attention focus region may be expanded in a situation in which the driver alternately focuses attention on the roadway ahead and the side (the left or the right) of the vehicle, such as when, based on the received travel information, the steering angle of the vehicle changes to reach or exceed a predetermined range, when the travel direction changes by a large angle - such as during a left turn (or a right turn) - or when the driver attempts to change the lanes. At this point, when the steering angle of the vehicle falls below the predetermined range as it did previously, when the travel direction changes, or when the lane change is complete, the expanded attention focus region may be restored to its original size, as illustrated in (a) of FIG. 10.

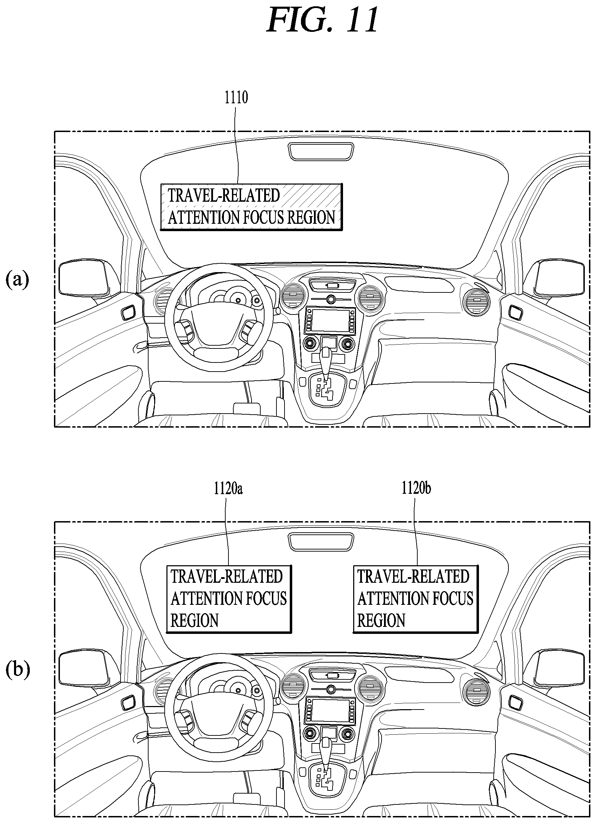

FIG. 11 illustrates an example where the number of attention focus regions is changed (for example, increased) based on the travel information of the vehicle. For example, as illustrated in (b) of FIG. 11, based on the travel information of the vehicle, the number of attention focus regions may be increased, thereby expanding the initial attention focus region 1110 illustrated in (a) of FIG. 11 into a first attention focus region 1120a, matched to the initial attention focus region, and a second attention focus region 1120b, matched to the middle region of the front windshield in front of the front passenger seat.

As illustrated in (b) of FIG. 11, the number of attention focus regions may be changed in a situation in which the driver is required to focus attention on both the roadway ahead and the side (the right or the left) of the vehicle. At this point, when the situation in which the driver is required to focus attention on both the roadway ahead and the side of the vehicle comes to an end, as illustrated in (a) of FIG. 11, the number of attention focus regions may be reduced, thereby integrating the first attention focus region 1120a and the second attention focus region 1120b into the initial attention focus region 1110.

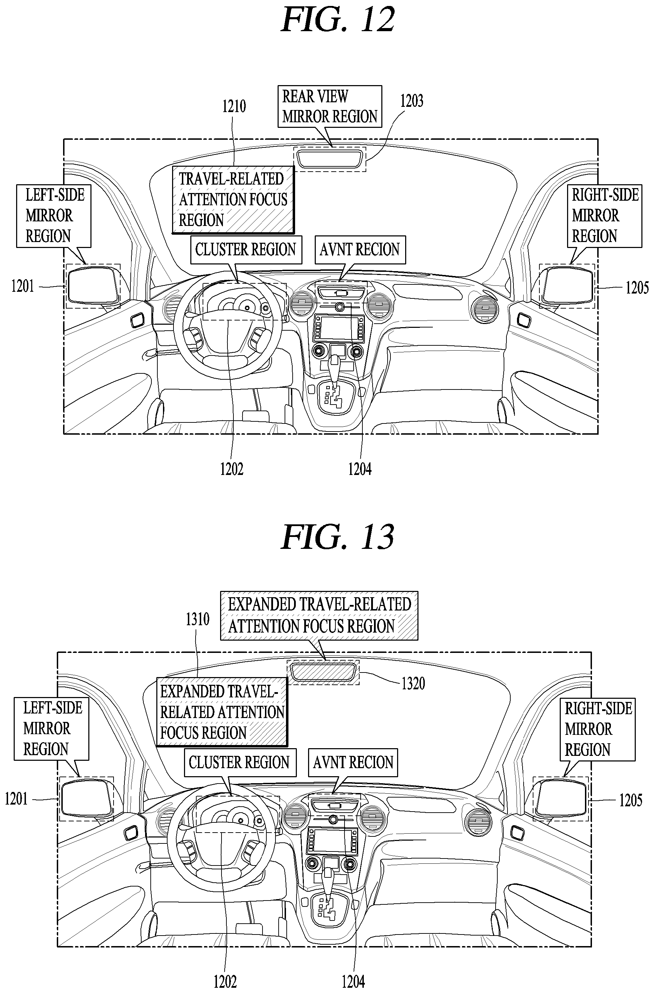

FIG. 12 illustrates various regions to which the driver's gaze, monitored during vehicle travel, may be directed. Based on the above-described travel information, one or several of these regions may be added as attention focus regions to be monitored and, in this case, may be set to have different sensitivity levels for the driver's gaze dispersion.

As illustrated in FIG. 12, in addition to an initial attention focus region 1210, the possible attention focus regions may include a vehicle's left-side mirror region 1201, a vehicle's right-side mirror region 1205, a cluster region 1202 on which a vehicular instrument dashboard is displayed, a vehicle's rearview mirror region 1203, and a vehicle's Audio Video Navigation Telematics (AVNT) system region 1204. However, the attention focus regions illustrated in FIG. 12 are exemplary. One or more attention focus regions may be added to the illustrated attention focus regions, or one or more of the illustrated attention focus regions may be omitted.

Based on the travel information, the driver monitoring apparatus 800 may change an attention focus region to be monitored, which is selected from among the possible attention focus regions 1210, 1201, 1202, 1203, 1204, and 1205. In addition, the driver monitoring apparatus 800 may adjust the sensitivity level for the driver's gaze dispersion partially occurring within the attention focus region selected from among the possible attention focus regions 1210, 1201, 1202, 1203, 1204, and 1205. At this point, in a case where a plurality of attention focus regions are selected, different sensitivity levels for the driver's gaze dispersion may be applied to the attention focus regions, respectively.

The driver monitoring apparatus 800 may determine whether or not attentive driving is necessary by ascertaining the driver's state based on the changed attention focus region and/or the sensitivity level for the driver's gaze dispersion. In such a case, the driver monitoring apparatus 800 may transfer a corresponding alert signal (for example, a control signal for DMA alerting) to one or more output means within the vehicle.

The driver monitoring apparatus 800 may recognize that the causes of changes in the attention focus region and/or the sensitivity level for the driver's gaze dispersion no longer exist, and restore the attention focus region and/or a value of the sensitivity level for the driver's gaze dispersion to their original states, respectively. Accordingly, the initial attention focus region 1210 and an initial value of the driver's gaze dispersion level for the initial attention focus region 1210 serve as determination references for determining the driver's state.

Throughout the present specification, raising (increasing) the sensitivity level for the driver's gaze dispersion means setting an allowable threshold duration, representing the maximum allowable time the driver does not focus attention on the determined attention focus region, to be shorter when determining inattentive driving, or means setting an allowable accumulated threshold duration, representing the total time the driver's eyes remain closed, to be shorter when determining inattentive driving.

For example, when an initial value of the allowable threshold duration, for which monitoring detects that the driver does not focus attention on the roadway ahead, is 3 seconds (according to Euro NCAP), raising (increasing) the sensitivity level for the driver's gaze dispersion may involve an adjustment to a value of less than 3 seconds (for example, 2 seconds or 2.5 seconds). Alternatively, for example, when an initial value of the allowable accumulated threshold duration, for which monitoring detects that the driver does not focus attention on the roadway ahead, is 10 seconds within 30 seconds (according to Euro NCAP), raising (increasing) the sensitivity level for the driver's gaze dispersion may involve an adjustment to a value of less than 10 seconds (for example, 9 seconds or 9.5 seconds) within 30 seconds.

In addition, throughout the present specification, lowering (decreasing) the sensitivity level for the driver's gaze dispersion means setting the allowable threshold duration, representing the maximum allowable time the driver does not focus attention on the determined attention focus region, to be longer when determining inattentive driving, or means setting the allowable accumulated threshold duration, representing the total time the driver's eyes remain closed, to be longer when determining inattentive driving.

For example, when the initial value of the allowable threshold duration, for which monitoring detects that the driver does not focus attention on the roadway ahead, is 3 seconds (according to Euro NCAP), lowering (reducing) the sensitivity level for the driver's gaze dispersion may involve an adjustment to a value of more than 3 seconds (for example, 3.5 seconds). Alternatively, for example, when the initial value of the allowable accumulated threshold duration, for which monitoring detects that the driver does not focus attention on the roadway ahead, is 10 seconds within 30 seconds (according to Euro NCAP), lowering (reducing) the sensitivity level for the driver's gaze dispersion may involve an adjustment to a value of more than 10 seconds (for example, 10.5 seconds or 11 seconds) within 30 seconds.

Examples where the attention focus region and the sensitivity level for the driver's gaze dispersion are adaptively varied according to various types of travel information of the vehicle and various situations of the vehicle are described in detail below.

FIG. 13 is a view illustrating that the attention focus region is changed based on information about noise in the vicinity of the vehicle, using the driver monitoring apparatus according to the embodiment of the present disclosure.

The driver monitoring apparatus 800 may receive the information about the noise in the vicinity of the vehicle, which is collected using one or more microphones or directional microphones that are mounted inside the vehicle or on the outside of the vehicle. The directional microphone is a microphone configured to selectively capture only sound at a narrow angle from a specific direction.

The driver monitoring apparatus 800 may determine whether or not to expand the attention focus region based on the captured noise in the vicinity of the vehicle, and, based on the determination, may monitor the driver's state corresponding to the extent of the driver's gaze dispersion.

Specifically, in a case where the captured noise in the vicinity of the vehicle exceeds a predetermined range (for example, 90 dB to 100 dB), the driver monitoring apparatus 800 may expand the attention focus region in a manner that corresponds to the direction from which the captured noise originates. This is because the duration for which the driver focuses attention on the direction from which the captured noise is originated is predicted to increase in order to check the cause of the occurrence of the noise.

For example, in response to loud noise (a vehicle horn or an emergency siren from an ambulance or police vehicle) occurring behind the vehicle, the driver monitoring apparatus 800 may categorize types of noise and, based on the categorization result, expand a rearview mirror region into the attention focus region, thereby monitoring the driver's state. At this point, when the above-described loud noise occurs simultaneously from various directions, such as from the side (for example, the left side or right side) of the vehicle and behind the vehicle, only the region selected based on the categorized type of noise may be expanded into the attention focus region. For example, only the side mirror region corresponding to the left side from which the siren sound of an ambulance originates may be expanded into the attention focus region.

With reference to FIG. 13, while focusing attention on an initial attention focus region 1310 in front of the vehicle, the driver can verify that a rearview mirror region 1320 is included in the expanded attention focus region when noise originates behind the vehicle. However, the processor 820 of the driver monitoring apparatus 800 performs this expansion using DMS control algorithms. Thus, the driver does not need to recognize whether or not to expand the traveling-related attention focus region. Therefore, the expansion process is not displayed externally. According to an embodiment, when the attention focus region is expanded or restored, the expansion process may also be displayed externally using an alert lighting technique.

In a case where expansion into one or more attention focus regions is performed in this manner based on the travel information of the vehicle, the processor 820 of the driver monitoring apparatus 800 may increase the sensitivity level for the driver's gaze dispersion partially occurring within the expanded attention focus region in such a manner as to reach or exceed a predetermined range and monitor the driver's state using the increased sensitivity level for the driver's gaze dispersion. The reason for this is that the driver is required to focus attention on the expanded attention focus region matched to the direction from which noise originates.

The processor 820 of the driver monitoring apparatus 800 applies an adjusted sensitivity level value to the driver's gaze dispersion partially occurring within an expanded attention focus region 1320 and operates in such a manner as to enable monitoring of the driver's state. Accordingly, when the driver does not focus attention on the expanded attention focus region in compliance with a determination reference for the changed sensitivity level value, the processor 820 may perform in such a manner as to output a DMS alert. However, this DMS alert associated with the driver's gaze dispersion partially occurring within the expanded attention focus region may be a lower-level alert (warning sound at a low volume, alert lighting, or the like)

The processor 820 of the driver monitoring apparatus 800 reduces the adjusted sensitivity level value to the driver's gaze dispersion partially occurring within the attention focus region 1310 more than before, and operates in such a manner as to enable monitoring of the driver's state. This is because the driver cannot focus attention on the initial attention focus region 1310 for as much time as the driver spends focusing attention on the expanded attention focus region 1320 to ascertain the cause of noise that occurs behind the vehicle.

The case where the rearview mirror is included as the expanded attention focus region 1320 is primarily described above. However, depending on the direction from which noise in the vicinity of the vehicle originates, the left-side mirror region 1201 and/or the right-side mirror region 1205 may be included as the expanded attention focus region.

In addition, in a case where the situation causing the expansion of the attention focus region comes to an end, for example, in a case where an ambulance moves away from the current location of the vehicle, restoration may be performed in such a manner as to exclude the rearview mirror 1320, which is an expanded attention focus region, and to leave only the initial attention focus region 1310 as the attention focus region to be monitored.

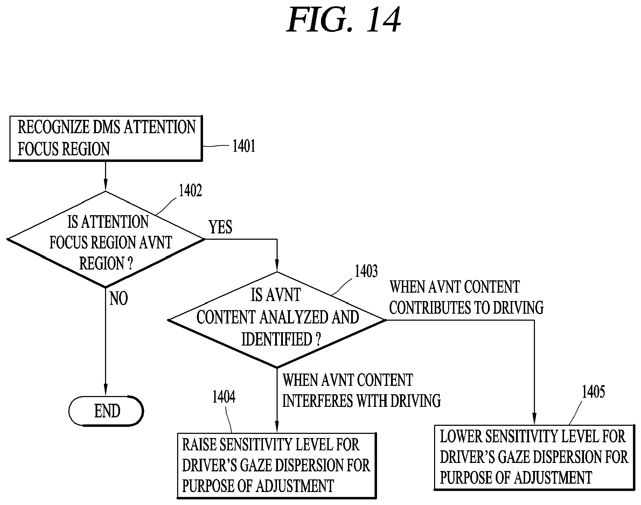

FIG. 14 is an exemplary flowchart illustrating the adjustment of the sensitivity level for the driver's gaze dispersion according to the type of content in a case where the driver focuses attention on the vehicular infotainment system during vehicle travel.

With reference to FIG. 14, the processor 820 of the driver monitoring apparatus 800 recognizes the attention focus region, which serves a determination reference for monitoring the driver's gaze dispersion, during vehicle travel (1401).

Subsequently, the processor 820 may recognize that an infotainment system (Audio Video Navigation Telematics (hereinafter referred to as an 'AVNT') in the vehicle is in operation by processing the received travel information of the vehicle or by communicating with the AVNT in the vehicle.

The AVNT is formed by integrating telematics, which is a communication service, into an Audio Video Navigation (AVN) system, which is an existing vehicular infotainment system, and additionally provides the functions of automatic real-time updates and content utilization.

The processor 820 may determine whether or not an AVNT region is included as the attention focus region at which the driver's gaze remains (1402). Specifically, based on the driver's face and gaze direction, which are recognized through the DSM camera, the processor 820 may determine whether or not the driver's gaze remains within the attention focus region or the AVNT region for forward travel.

For example, in a case where, during vehicle travel, the AVNT is in operation and the driver's gaze remains within the AVNT region, the driver's gaze dispersion is monitored with the AVNT region being included as the attention focus region. Conversely, for example, in a state where the AVNT is in operation during vehicle travel but the driver continuously gazes at the roadway ahead or in a state where the AVNT is turned off during vehicle travel, the driver's gaze dispersion for the initial attention focus region only is monitored without the AVNT region being included in the attention focus region.

When the AVNT region is included in the attention focus region to be monitored, the processor 820 may identify the type of content by analyzing content that is output, as the travel information of the vehicle, from the AVNT (1403). The reason for this is to adjust the sensitivity level for the driver's gaze dispersion for the AVNT region on a per-content type basis.

The processor 820 may determine whether or not the sensitivity level for the driver's gaze dispersion is reduced, depending on whether or not the content output from the AVNT is categorized as content that contributes to vehicle travel.

When the type of content is categorized as content that distracts from vehicle travel, for the purpose of adjustment, the processor 820 raises the sensitivity level for the driver's gaze dispersion for the AVNT region or a value of the sensitivity level thereof (1404). The reason for this is that, to ensure safe travel, the driver should avoid gazing at the AVNT region that interferes with driving.

At this point, the type of content that distracts from vehicle travel refers to content items that are categorized as including entertainment elements, such as TV, video, pictures, images, audio playback, and movies.

When the type of content is categorized as content that contributes to vehicle travel, for the purpose of adjustment, the processor 820 lowers the sensitivity level for the driver's gaze dispersion for the AVNT region or the value of the sensitivity level thereof (1404). Accordingly, at this point, although the driver focuses attention on the AVNT region, this is not falsely identified as the driver's gaze dispersion. The reason for this is to prevent the DMS alert from occurring even in a case where the driver needs to focus attention on the AVNT region during vehicle travel.

At this point, the type of content that contributes to vehicle travel refers to content items that are categorized as including travel-related elements, such as a navigation function and an Around View image display function.

In a state where the AVNT is in operation but the driver gazes at the roadway ahead for a predetermined time or where the AVNT is turned off, the sensitivity level for the driver's gaze dispersion for both the initial gaze direction and the AVNT region or the sensitivity level value of the driver's gaze dispersion may be restored to its original state.

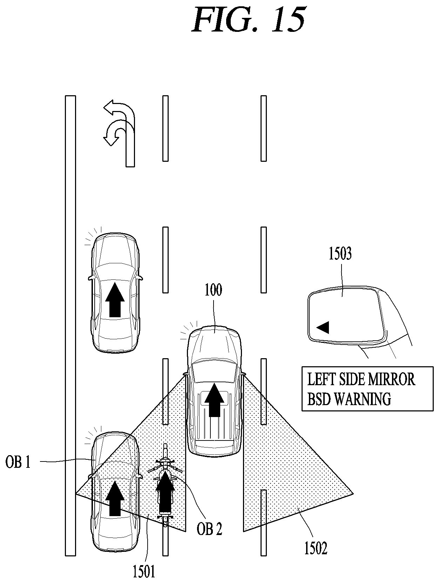

FIG. 15 is an exemplary view illustrating the adjustment of the sensitivity level for the driver's gaze dispersion in a case where Blind Spot Detection (BSD) alert display in the vehicle is in a turned-on state, using the driver monitoring apparatus according to the embodiment of the present disclosure.

The driver monitoring apparatus 800 may recognize the turned-on state of the Blind Spot Detection (BSD) alert display as the travel information of the vehicle 100.

A Blind Spot Detection (BSD) device is a warning device for detecting blind spots on the rear-left and rear-right sides of the vehicle. In a case where an object approaching from the right side of the vehicle when viewed from the travel lane of the vehicle is detected, the BSD alert display lights up in the right-side mirror region. Similarly, in a case where an object approaching from the left side of the vehicle is detected, the BSD alert display lights up in the left-side mirror region.

When it is recognized that the BSD alert display is in the turned-on state, the driver monitoring apparatus 800 may reduce the sensitivity level for the driver's gaze dispersion partially occurring within a BSD region where the BSD alert display is in the turned-on state.

Specifically, for example, in FIG. 15, while the vehicle 100 travels, it is detected whether or not an object (for example, another vehicle, a two-wheeled vehicle, an electric scooter, or the like) is present in a left-side region 1501 and a right-side region 1502, which are blind spots when viewed from the travel lane of the vehicle 100. When an object OB2, which is one of objects OB1 and OB2 detected in the left-side region 1501, approaches within a predetermined distance from the vehicle, and thus the BSD alert display in a left-side mirror region 1503 is in the turned-on state, the left-side mirror region 1503 where the BSD alert display is turned on may be included in the attention focus region, and the sensitivity level for the driver's gaze dispersion is reduced more than before, thereby determining the driver's state, such as the driver's inattentive state.

While a BSD warning light is in a turned-on state, the sensitivity level for the driver's gaze dispersion is reduced in this manner. This is because the driver drives the vehicle while focusing attention on the side mirror region to remain aware of the object approaching the vehicle. Therefore, the driver monitoring apparatus 800 may monitor the driver's state by autonomously relaxing the determination reference in an adaptive manner so that the DMS alert does not occur in this case.

Although not illustrated, in a case where an object approaches the right side of the vehicle and thus the BSD alert display in the light-side mirror region is turned on, the right-side mirror region where the BSD alert display is turned on may be included in the attention focus region, and the sensitivity level for the driver's gaze dispersion is reduced more than before, thereby determining the driver's state, such as the driver's inattentive state.

When the object OB2 approaching from the left side of the vehicle moves away from the vehicle, the BSD warning light in the left-side mirror region 1503 is turned off. In this case, the driver monitoring apparatus 800 restores the sensitivity level for the driver's gaze dispersion for the left-side mirror region 1503 to its original state and monitors the driver's state using a default value.

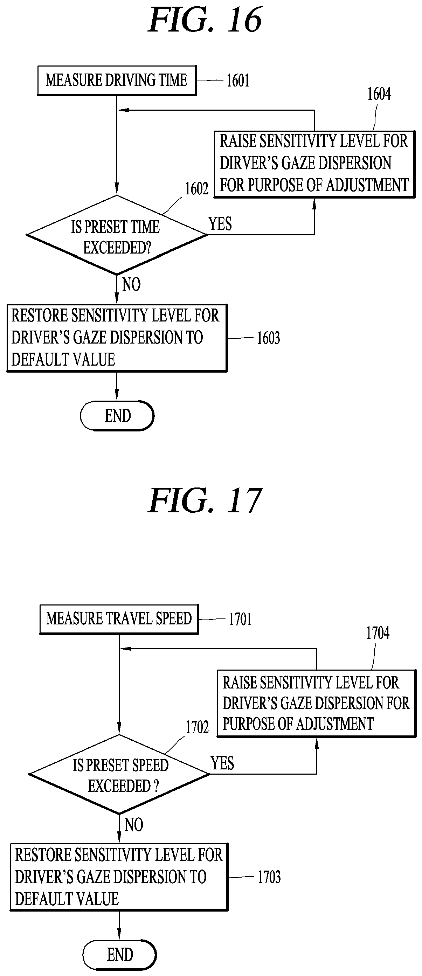

FIG. 16 is an exemplary flowchart illustrating the adjustment of the sensitivity level for the driver's gaze dispersion based on the accumulated travel time of the vehicle, using the driver monitoring apparatus according to the embodiment of the present disclosure.

When the vehicle starts, the accumulated travel time of the vehicle may be recorded. For example, the accumulated travel time of the vehicle may be received by the driver monitoring apparatus 800 through the GNSS reception module. Depending on the situation, instead of the accumulated travel time of the vehicle, the accumulated travel distance may also be received by the driver monitoring apparatus 800 through the GNSS reception module.

After the vehicle starts to travel or after the vehicle travels at or above a predetermined speed (for example, 10 km/h), when it is recognized that the received accumulated travel time (or accumulated travel distance) reaches a predetermined range (for example, one hour or more), the driver monitoring apparatus 800 may increase the sensitivity level for the driver's gaze dispersion for the attention focus region.

The reason for this is to improve the effectiveness of the safe driving by further enhancing the driver's duty to focus attention on the roadway ahead in a case where the driver drives the vehicle for a long time.

With reference to FIG. 16, first, the driver monitoring apparatus 800 may receive as the travel information the result of measuring the driving time of the vehicle (1601).

Based on the received travel information, the driver monitoring apparatus 800 determines whether or not the accumulated travel time (or accumulated travel distance) exceeds the predetermined range while the vehicle travels at or above a predetermined speed (1602). At this time, the predetermined range has a predetermined value (for example, one hour or more) as a default value and may vary (increase/reduce) within a predetermined range based on situational information such as the volume of traffic, road conditions, difficulty of travel on roads, and remaining travel time to a destination.

When the accumulated travel time (or accumulated travel distance) exceeds the predetermined range, for the purpose of adjustment, the driver monitoring apparatus 800 may raise the sensitivity level for the driver's gaze dispersion that serves as a determination reference for inattentive driving (1604). The reason for this is to further enhance the driver's duty to focus attention on the roadway ahead to prevent the occurrence of an accident caused by increasing driving fatigue in a case where the driver drives the vehicle for a long time.

In an embodiment, after the accumulated travel time (or accumulated travel distance) exceeds the predetermined range, for the purpose of adjustment, the sensitivity level for the driver's gaze dispersion may be raised proportionally each time a predetermined travel time (or travel distance) (for example, 30 minutes) is reached. At this point, the maximum value to which the sensitivity level for the driver's gaze dispersion can be raised may be preset.

In another embodiment, after the accumulated travel time (or accumulated travel distance) exceeds the predetermined range, the driver may be substantially enabled to further focus attention on the roadway ahead by reducing the size of the attention focus region each time a predetermined travel time (or travel distance) is reached.

Even after the sensitivity level for the driver's gaze dispersion is raised in this manner for the purpose of adjustment, based on the reception of other travel information (for example, a U-turn, a lane change, or turning-on of the BSD alert display due to the detection of an object approaching the vehicle), the attention focus region may be varied, or the sensitivity level for the driver's gaze dispersion may be lowered for the purpose of adjustment.

In this regard, in a case where multiple travel information pieces are received, the driver monitoring apparatus 800 may assign high priority to travel information closely associated with safe vehicle driving or to instances where frequent gaze changes are necessary for vehicle travel, and thus operate in a manner as to vary the attention focus region and the value of the sensitivity level for the driver's gaze dispersion accordingly.

For example, after the accumulated travel time (or accumulated travel distance) exceeds the predetermined range, priority may be increased each time a predetermined travel time (or travel distance) (for example, 30 minutes) is reached. However, for example, in the case of events that are temporarily necessary for vehicle travel, such as when gaze changes are necessary for a lane change or a U-turn, higher priority may be assigned to the travel information, such as a lane change or a U-turn, in such a manner that the value of the sensitivity level for the driver's gaze dispersion is temporarily lowered.

While the accumulated travel time (or accumulated travel distance) falls within the predetermined range, the driver monitoring apparatus 800 sets the sensitivity level for the driver's gaze dispersion to a default setting value and accordingly monitors the driver's state, such as the driver's inattentive state. However, even at this point, the attention focus region and/or the value of the sensitivity level for the driver's gaze dispersion may be adjusted based on the reception of other travel information with high priority (for example, a U-turn, a lane change, or turning-on of the BSD alert display due to the detection of an object approaching the vehicle).

FIG. 17 is an exemplary flowchart illustrating the adjustment of the sensitivity level for the driver's gaze dispersion based on the travel speed of the vehicle, using the driver monitoring apparatus according to the embodiment of the present disclosure.

While the vehicle travels at high speed, the driver monitoring apparatus 800 may monitor the driver's state, such as the driver's inattentive state, by increasing the value of the sensitivity level for the driver's gaze dispersion in such a manner that the driver attentively gazes at the roadway ahead. The reason for this is to strictly apply a determination reference for the driver's gaze dispersion because the driver's brief gaze dispersion may lead to a nasty accident in a case where the vehicle travels at high speed.

The travel speed of the vehicle may be displayed on the instrument board in the cluster region 1202 of the vehicle. For example, information about the travel speed of the vehicle may be received by the driver monitoring apparatus 800 through the GNSS reception module (1701).

The driver monitoring apparatus 800 may determine whether or not the vehicle travels at or above a predetermined travel speed during vehicle travel (1702).

At this point, for example, the predetermined travel speed may be 100 km/h but is not limited to this value. In an embodiment, the predetermined travel speed may vary based on the speed limit on the travel road. For example, the predetermined travel speed is set to a limited speed value (for example, 20 km/h in the case of a children's protection zone) in a restricted speed area. On expressways, the predetermined travel speed may be set to a value (for example, ranging from 100 km/h to 110 km/h) that corresponds to the allowable maximum travel speed or less. To this end, the driver monitoring apparatus 800 may receive the travel information, including a value corresponding to the speed limit on the travel road.

When it is recognized that the received travel speed of the vehicle reaches or exceeds a predetermined travel speed (for example, 100 km/h), for the purpose of adjustment, the driver monitoring apparatus 800 raises the sensitivity level for the driver's gaze dispersion for the attention focus region (1704).

According to an embodiment, the extent to which the sensitivity level for the driver's gaze dispersion is raised may increase in a manner that corresponds to the extent to which the travel speed of the vehicle exceeds the predetermined travel speed. In addition, the extent to which the sensitivity level for the driver's gaze dispersion is raised in a manner that corresponds to the extent to which the predetermined travel speed is exceeded may be increased or reduced based on information about the speed limit on the travel road.

When the received travel speed of the vehicle falls within the predetermined travel speed (for example, 100 km/h), the driver monitoring apparatus 800 monitors the driver's state by monitoring the driver's gaze dispersion using the default setting value (1703).

In addition, although not illustrated, after the sensitivity level for the driver's gaze dispersion is raised for the purpose of adjustment, when it is recognized that the travel speed of the vehicle is reduced to return to or remain within the predetermined travel speed, the driver monitoring apparatus 800 restores the sensitivity level for the driver's gaze dispersion to the default setting value and then monitors the driver's state.

The travel direction of the vehicle is changed according to the shape of the road along which the vehicle travels or as needed during vehicle travel, such as a lane change, a turn, or a U-turn. Thus, the driver may naturally shift the driver's gaze toward the changed travel direction while still gazing at the roadway ahead. In this case, when the driver's gaze is monitored based on the same determination reference, the driver's gaze may be falsely identified as the driver's gaze dispersion.

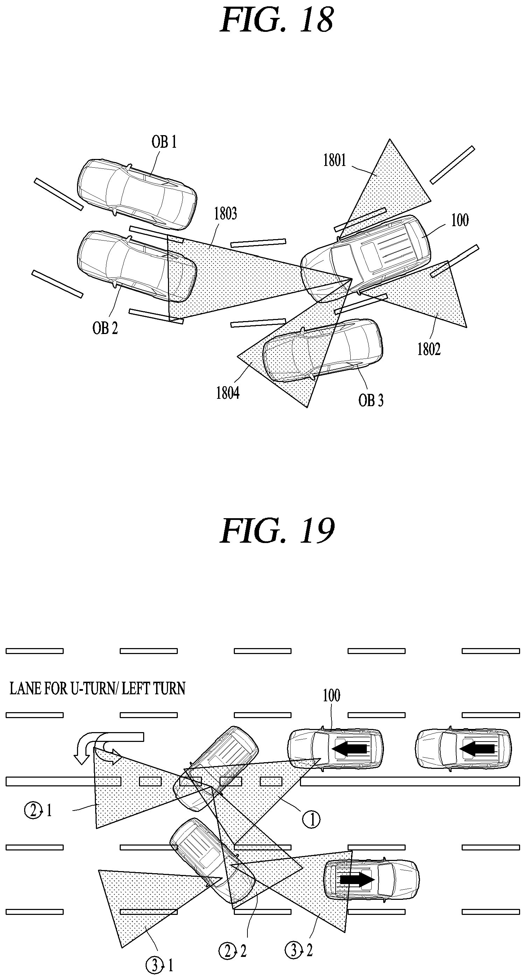

FIG. 18 is an exemplary view illustrating the adjustment of the sensitivity level for the driver's gaze dispersion based on the steering direction of the vehicle, using the driver monitoring apparatus according to the embodiment of the present disclosure.

FIG. 19 is an exemplary view illustrating the adjustment of the sensitivity level for the driver's gaze dispersion during a vehicle U-turn, using the driver monitoring apparatus according to the embodiment of the present disclosure.

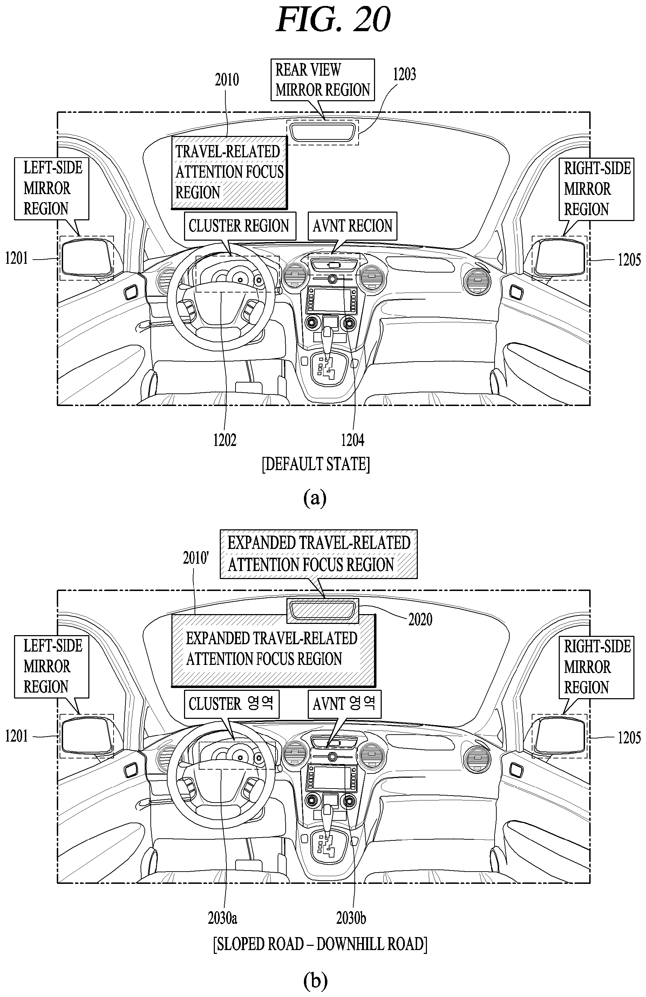

In addition, FIG. 20 is a view illustrating the adjustment of a range of a travel-related attention focus region for the driver during vehicle travel on a sloped road, using the driver monitoring apparatus according to the embodiment of the present disclosure.

First, with reference to FIG. 18, the driver monitoring apparatus 800 may receive angle information of the steering wheel of the vehicle, as the travel information, from the vehicle during vehicle travel.

In a case where the vehicle travels on a curved road as illustrated in FIG. 18, the driver monitoring apparatus 800 may recognize that the angle of the steering wheel of the vehicle 100 reaches or exceeds a predetermined range. At this point, a value of the angle of the steering wheel, which reaches or exceeds a predetermined range, may refer to a value of the angle of a normal steering wheel that varies when the vehicle changes lanes, travels on a curved road or makes a U-turn.

In a case where the angle of the steering wheel of the vehicle reaches or exceeds the predetermined range in this manner, as illustrated in FIG. 18, the attention focus region is added to account for the shift of the driver's gaze for monitoring the approaching objects OB1, OB2, and OB3 in the vicinity of the vehicle. For example, the expanded attention focus region in front of the vehicle and the side mirror regions, which correspond to the rear side and the left and right sides, may be recognized as attention focus regions 1801, 1802, 1803, and 1804.

The reason that the attention focus region in front of the vehicle is expanded is that the driver operates the steering wheel while focusing attention on the steering direction of the vehicle. The reason that the attention focus regions, corresponding to the rear side and the left and right sides, are added is that the driver briefly and repeatedly gazes at the rearview mirror and the side mirror for defensive driving while operating the steering wheel.

In addition, the attention focus region to be added may be determined in a manner that corresponds to the travel direction. For example, in a case where the vehicle makes a right turn, the right-side mirror region may be added as the attention focus region. For example, in a case where the vehicle makes a left turn, the left-side mirror region may be added as the attention focus region.

In this manner, the driver monitoring apparatus 800 may expand the attention focus region in a manner that corresponds to the travel direction of the vehicle. The driver monitoring apparatus 800 monitors the driver's state by reducing the sensitivity level for the driver's gaze dispersion for the expanded attention focus region.

In an embodiment, the value of the sensitivity level for the driver's gaze dispersion for the attention focus region associated with a change in the travel direction of the vehicle may be reduced. However, the value of the sensitivity level for the driver's gaze dispersion for the attention focus region not associated with the change in the travel direction of the vehicle may be increased.

Specifically, while it is recognized that the angle of the steering wheel of the vehicle reaches or exceeds the predetermined range, the driver monitoring apparatus 800 may increase the sensitivity level for the driver's gaze dispersion for the infotainment system in the vehicle, that is, for each of the AVNT region and the cluster region. This is because the driver's shift of gaze to only the expanded or added gaze region contributes to safe driving.

When the vehicle enters a straight road, the angle information of the steering wheel, which is received by the driver monitoring apparatus 800, falls within a predetermined range. In this case, the extended attention focus region and the lowered sensitivity level for the driver's gaze dispersion are restored to their original values, respectively.

The reason for this is to temporarily lower the sensitivity level for the driver's gaze dispersion while the travel direction of the vehicle is changed and then ascertain the driver's state, such as the driver's inattentive state, based on an initially set determination reference when the change in the travel direction is complete, as done previously.

Next, with reference to FIG. 19, the adjustment of the sensitivity level for the driver's gaze dispersion during the vehicle's U-turn is described in greater detail.

In a case where a significant change in the steering direction occurs, such as during a U-turn, it is simultaneously necessary to focus attention on the travel direction of the vehicle and to monitor an object in the lane in the opposite direction. Particularly, the reason for this is to account for an increase in the number of times the driver's gaze shifts, based on the shape or situation of the road.

When the vehicle 100 is positioned within a predetermined distance from a U-turn point, a turn signal (for example, left-turn signal lighting or pedestrian signal lighting) and information about the angle of the steering wheel/travel direction (hereinafter referred to as 'U-turn-related information') may be input, as the travel information, into the driver monitoring apparatus 800.

Based on the received U-turn-related information, the driver monitoring apparatus 800 may expand the travel-related attention focus region, which varies with the change in the travel angle of the vehicle 100, and monitor the driver's state by adjusting the sensitivity level for the driver's gaze dispersion partially occurring within the expanded travel-related attention focus region.

For example, in FIG. 19, when the vehicle 100 enters the U-turn point and then travels in the straight direction, the driver monitoring apparatus 800 ascertains the driver's gaze dispersion based on an initial attention focus region (①) Next, in a case where the vehicle further makes a left turn for a U-turn and thus the travel angle is changed, the driver monitoring apparatus 800 monitors the driver's gaze dispersion based on an expanded or added attention focus region (②-1 or ②-2) in such a manner as to identify an object approaching in the opposite direction. Subsequently, in a case where the vehicle 100 continues turning and thus approaches the lane in the opposite direction, thereby maximally changing the steering direction, the driver monitoring apparatus 800 monitors the driver's gaze dispersion based on an attention focus region (③-1 or ③-2) further expanded or newly added compared to the previous state. Subsequently, when the vehicle fully enters the lane in the opposite direction and the travel direction aligns with the lane (completing the U-turn), the driver monitoring apparatus 800 restores the changed attention focus region and/or the sensitivity level for the driver's gaze dispersion to their original values, respectively, and thus monitors the driver's gaze, respectively.

According to an embodiment, in a section where a U-turn is substantially made, that is, in a section where the attention focus region is variably applied, the sensitivity level for the driver's gaze dispersion partially occurring within the cluster region and the AVNT region in the vehicle 100 may be raised for the purpose of adjustment. The reason for this is to prevent the driver's gaze from being diverted to vehicular equipment not associated with vehicle travel during a U-turn. Even in this case, when the U-turn is complete, the sensitivity level for the driver's gaze dispersion is restored to its original value.

Subsequently, with reference to FIG. 20, while the vehicle travels on a sloped road, the adjustment of the range of the travel-related attention focus region for the driver is described in detail.

In a case where the vehicle 100 travels on a steeply sloped road section, the driver's gaze is directed toward the direction corresponding to the sloping direction. For example, on a steeply sloped upward section, the driver gazes further upward than in a normal attention focus region during driving. On a steeply sloped downward section, the driver gazes further downward than in the normal attention focus region during driving.

Accordingly, the driver monitoring apparatus 800 may receive information about travel-related slope angle, which is input through an apparatus/module mounted in the vehicle 100, for example, through an Inertial Navigation System (INS) module. Based on the received travel-related slope angle, the driver monitoring apparatus 800 may change (for example, expand) the attention focus region or adjust the driver's gaze dispersion.

(a) of FIG. 20 illustrates a travel-related attention focus region 2010 in the case where the travel-related slope angle is gentle or within a predetermined range, that is, in the default state, and in-vehicle regions 1201, 1202, 1203, 1204, and 1205 toward which the driver's gaze can be directed.

In a case where the travel-related slope angle of the vehicle indicates an upward slope, that is, in a case where a travel road is an upward-sloping road, the driver monitoring apparatus 800 may change the attention focus region in such a manner that the travel-related attention focus region 2010 is further expanded. The reason for this is to prevent the driver's gaze from unintentionally deviating from the travel-related attention focus region 2010 for several seconds when the driver's gaze is directed upward while traveling on the upward-sloping road and thus to prevent false triggers of the DMS warning alert.

In a case where the travel-related slope angle of the vehicle indicates a downward slope, that is, in a case where a travel road is a downward-sloping road, as illustrated in (b) of FIG. 20, the driver monitoring apparatus 800 may define, as a reference for monitoring the driver, an attention focus region 2010', which results from changing the travel-related attention focus region 2010 for further rightward expansion. The reason for this is to prevent the false identification that the driver's gaze unintentionally deviates from the travel-related attention focus region 2010 for several seconds or is directed toward the cluster region when the driver's gaze is directed rightward while traveling on the downward-sloping road and thus to prevent false triggers of the DMS warning alert.

At this point, the range of the expanded attention focus region 2010' may be extended up to a rearview mirror 2020.

In addition, the attention focus determination ranges of cluster region 2030a and AVNT region 2030b may be varied due to the expanded attention focus region 2010'. That is, the direction in which the attention focus region is expanded may be adjusted in such a manner as to face the infotainment system and the cluster region in the vehicle. Accordingly, the sizes of the attention focus regions of a cluster region 2030a and an AVNT region 2030b may be reduced temporarily. The reason for this is to assume that the driver's gaze shifts widely upward and downward while the vehicle travels on a sloped road.

According to an embodiment, in response to the recognition that the travel-related slope angle of the vehicle deviates from a predetermined range, the driver monitoring apparatus 800 may reduce the sensitivity level for the driver's gaze dispersion partially occurring within the expanded attention focus region in proportion to the extent to which the travel-related slope angle of the vehicle deviates from the predetermined range. This is because the driver's gaze is diverted from the extended attention focus region even when the attention focus region is expanded in a case where the driver's gaze shifts widely upward and downward.

Subsequently, when the vehicle travels a sloped road and then enters a gently sloped road or a flat road as it did previously, the varied attention focus region is restored to its original state, and the driver's gaze is monitored.

As described above, according to one or several embodiments of the present disclosure, various types of travel information that change in real time while the vehicle travels are collected, and the attention focus region or the sensitivity level for the driver's gaze dispersion for determining the driver's state are adjusted adaptively. Thus, the driver's gaze that shifts as needed during vehicle travel and the driver's gaze dispersion that occurs due to inattentiveness during vehicle travel can be distinguished. Accordingly, the driver's state can be ascertained more accurately, and thus the DMS alert can be provided. In addition, the travel-related attention focus region and the sensitivity level for the driver's gaze dispersion, which serve as determination references for ascertaining the driver's state, are changed and applied in a manner adaptable to the situation. Then, when the travel situation leading to this change comes to an end, or another situation occurs, the changed travel-related attention focus region and sensitivity level for the driver's gaze dispersion are restored to their original states, respectively. Thus, a safe driving function can be provided reliably. In addition, in a case where the driver's gaze shifts naturally while the driver drives the vehicle, this shift is not falsely identified as the driver's gaze dispersion or driving inattentiveness. Thus, false alarms or their frequent occurrence can be prevented. Accordingly, an increase in fatigue or driving disturbance, caused by false alarms from the DMS and their frequent occurrence, can be eliminated.

The present disclosure can be embodied as computer-readable codes (applications or software modules) on a program-recorded medium. The method of controlling an autonomous vehicle can be implemented with codes stored in memory or similar storage.

Examples of computer-readable media include all types of recording devices capable of storing data readable by a computer system. Furthermore, examples of the computer-readable medium include a hard disk drive (HDD), a solid-state disk (SSD), a silicon disk drive (SDD), a ROM, a RAM, a CD-ROM, a magnetic tape, a floppy disk, an optical data storage device, and the like. The computer-readable medium may also be realized in the form of a carrier wave (such as for transmission over the Internet). In addition, the computer may also include a process or a control unit. Therefore, the description detailed above should be regarded as exemplary without being interpreted in a limited manner in all aspects. The scope of the present disclosure should be determined by the proper construction of the following claims. All equivalent modifications to the embodiments of the present disclosure fall within the scope of the present disclosure.

## Claims

1. A driver monitoring apparatus comprising:
a reception unit that receives travel information of a vehicle that travels;
a sensor that is mounted inside the vehicle and detects a driver's face and gaze direction during vehicle travel; and
a processor that monitors the driver's gaze dispersion partially occurring within an attention focus region using the sensor, determines whether or not to change the attention focus region based on the received travel information, and determines the driver's state corresponding to the driver's gaze dispersion based on the determination,
wherein the processor monitors the sensitivity level for the driver's gaze dispersion partially occurring within the attention focus region based on the received travel information.

2. The driver monitoring apparatus of claim 1, wherein a change in the attention focus region corresponds to one or more changes in the following: the location of the attention focus region, the size of the attention focus region, the number of attention focus regions, or the duration of the driver's gaze fixation, and
wherein the processor determines the extent of the driver's gaze dispersion based on either the duration for which the driver's gaze direction remains within the attention focus region or the frequency with which the driver's gaze remains within the attention focus region.

3. The driver monitoring apparatus of claim 1, wherein the travel information includes information about noise in the vicinity of the vehicle, which is collected by a microphone in the vehicle, and
wherein the processor determines whether or not to expand the attention focus region based on the collected information about the noise in the vicinity of the vehicle and monitors the driver's state corresponding to the extent of the driver's gaze dispersion based on the determination.

4. The driver monitoring apparatus of claim 3, wherein, in a case where one or more attention focus regions are expanded based on the determination, the processor increases the sensitivity level for the driver's gaze dispersion partially occurring within the expanded attention focus region in such a manner as to reach or exceed a predetermined range and monitors the driver's state using the increased sensitivity level for the driver's gaze dispersion.

5. The driver monitoring apparatus of claim 1, wherein the processor changes the sensitivity level for the driver's gaze dispersion based on the travel information, and then, in response to the recognition that the cause of the change in the sensitivity level no longer exists, restores the attention focus region and the sensitivity level for the driver's gaze dispersion to the original states thereof, respectively.

6. The driver monitoring apparatus of claim 1, wherein the sensor is a DMS camera that is installed on the front side of the interior of the vehicle and recognizes the driver's face and gaze direction, and
wherein, in a case where it is determined that attentive driving is necessary depending on the driver's determined state, the processor transfers a corresponding alert signal to one or more output means.

7. The driver monitoring apparatus of claim 1, wherein the travel information of the vehicle includes an operational state of an infotainment system in the vehicle, and
wherein the processor recognizes that a region of the infotainment system is included in the attention focus region, analyzes the type of content output to the infotainment system while the infotainment system is in operation, and adjusts the sensitivity level for the driver's gaze dispersion in a manner that varies with the analysis.

8. The driver monitoring apparatus of claim 7, wherein the processor determines whether or not to reduce the sensitivity level for the driver's gaze dispersion, depending on whether or not the content is categorized as content that contributes to the vehicle travel.

9. The driver monitoring apparatus of claim 1, wherein the travel information of the vehicle includes a turned-on state of Blind Spot Detection (BSD) alert display, and
wherein the processor reduces the sensitivity level for the driver's gaze dispersion partially occurring within a BSD region where the alert display is turned on.

10. The driver monitoring apparatus of claim 1, wherein the travel information includes information about the accumulated travel time of the vehicle, and
wherein, in a case where the accumulated travel time, detected after the vehicle starts to travel, reaches a predetermined range, the processor increases the sensitivity level for the driver's gaze dispersion partially occurring within the attention focus region.

11. The driver monitoring apparatus of claim 1, wherein the travel information includes information about the travel speed of the vehicle, and
wherein, in a case where the travel speed of the vehicle exceeds a predetermined range, the processor increases the sensitivity level for the driver's gaze dispersion partially occurring within the attention focus region and adjusts the sensitivity level in such a manner as to increase in proportion to the travel speed of the vehicle.

12. The driver monitoring apparatus of claim 1, wherein the travel information includes angle information of a steering wheel of the vehicle, and
wherein, when it is recognized that the angle of the steering wheel of the vehicle reaches or exceeds a predetermined range, the processor expands the attention focus region in a manner that corresponds to the travel direction of the vehicle, and monitors the driver's state by reducing the sensitivity level for the driver's gaze dispersion partially occurring within the expanded attention focus region.

13. The driver monitoring apparatus of claim 12, wherein, while it is recognized that the angle of the steering wheel of the vehicle reaches or exceeds the predetermined range, the processor increases the sensitivity level for the driver's gaze dispersion for an infotainment system and a cluster region in the vehicle.

14. The driver monitoring apparatus of claim 1, wherein the travel information includes information about the travel-related slope angle of the vehicle, and
wherein, in response to the recognition that the travel-related slope angle of the vehicle deviates from a predetermine range, the processor expands the attention focus region and reduces the sensitivity level for the driver's gaze dispersion partially occurring within the expanded attention focus region in proportion to the extent to which the travel-related slope angle of the vehicle deviates from the predetermined range.

15. The driver monitoring apparatus of claim 14, wherein the expansion of the attention focus region is adjusted to face an infotainment system and a cluster region in the vehicle.

16. A method of operating a driver monitoring apparatus, the method comprising: a step of receiving travel information of a vehicle that travels;
a step of determining whether or not to change an attention focus region based on the received travel information;
a step of adjusting the sensitivity level for a driver's gaze dispersion partially occurring within the determined attention focus region based on the received travel information; and
a step of determining whether or not attentive driving is necessary depending on the driver's state corresponding to the driver's gaze dispersion and outputting an alert based on the determination.
